# EUROPEAN PATENT APPLICATION

(11) **EP 4 841 730 A1**
(43) Date of publication of application: **18.11.2026**
(21) Application number: 25770095.5
(22) Date of filing: 21.02.2025
(51) Int. Cl.: H01M 10/0525, H01G 11/32, H01G 11/46, H01G 11/64, H01M 4/36, H01M 4/131, H01M 4/133, H01M 4/505, H01M 4/525, H01M 4/587, H01M 10/0567

(54) **NONAQUEOUS ELECTROLYTIC SOLUTION POWER STORAGE ELEMENT**

(30) Priority: 13.03.2024 JP 2024039329
(71) Applicant: GS Yuasa International Ltd., Kisshoin, Minami-ku, Kyoto-shi, Kyoto 601-8520 (JP)
(72) Inventor: MATSUYOSHI, Tsubasa, Kyoto-shi, Kyoto 601-8520 (JP); KAWASOE, Yudai, Kyoto-shi, Kyoto 601-8520 (JP)
(74) Representative: Isarpatent
(86) International application number: PCT/JP2025/006107
(87) International publication number: WO 2025/192247

(57) **Abstract**

A non-aqueous electrolyte solution energy storage device according to one aspect of the present invention includes: a positive electrode; a negative electrode; and a non-aqueous electrolyte solution, in which the positive electrode contains a positive electrode active material containing a tungsten element, the negative electrode contains a carbon material as a negative electrode active material, a BET specific surface area of the negative electrode active material is 4.4 m²/g or more, and the non-aqueous electrolyte solution contains a compound having a reductive decomposition potential of 0.5 V (vs. Li/Li⁺) or more and 2.0 V (vs. Li/Li⁺) or less and a carboxylic acid ester.

## Description

### TECHNICAL FIELD

The present invention relates to a non-aqueous electrolyte solution energy storage device.

### BACKGROUND ART

Non-aqueous electrolyte solution secondary batteries typified by lithium-ion secondary batteries are widely used in electronic devices such as personal computers and communication terminals, automobiles, and the like, because of their high energy density. The non-aqueous electrolyte solution secondary battery generally includes: a pair of electrodes electrically isolated from each other by a separator; and a non-aqueous electrolyte solution interposed between the electrodes, and is configured to be charged and discharged by transfer of charge-transporting ions between the two electrodes. As non-aqueous electrolyte solution energy storage devices other than the non-aqueous electrolyte solution secondary batteries, capacitors such as lithium-ion capacitors and electric double layer capacitors have also been widely used.

In order to improve the performance of the non-aqueous electrolyte solution energy storage device, various elements may be added to a positive electrode active material.

Patent Literature 1 describes a non-aqueous electrolyte secondary battery using a lithium-nickel-cobalt-manganese composite oxide containing tungsten and niobium as the positive electrode active material.

### CITATION LIST

### Patent Literature

Patent Literature 1: Japanese Unexamined Patent Application Publication No. 2009-140787

### DISCLOSURE OF INVENTION

### PROBLEMS TO BE SOLVED BY THE INVENTION

By making the positive electrode active material contain a tungsten element, there is an advantage that the initial output of the non-aqueous electrolyte solution energy storage device is improved. In addition, from the viewpoint of improving the output of the non-aqueous electrolyte solution energy storage device, it is preferable to use a negative electrode active material having a large specific surface area. However, a discharge capacity after charge and discharge cycles is significantly reduced when a negative electrode active material having a large specific surface area is applied in a non-aqueous electrolyte solution energy storage device using a positive electrode active material containing a tungsten element.

An object of the present invention is to improve a disadvantage that a discharge capacity after charge and discharge cycles is significantly reduced when a negative electrode active material having a large specific surface area is applied in a non-aqueous electrolyte solution energy storage device using a positive electrode active material containing a tungsten element.

### MEANS FOR SOLVING THE PROBLEMS

A non-aqueous electrolyte solution energy storage device according to one aspect of the present invention includes: a positive electrode; a negative electrode; and a non-aqueous electrolyte solution, in which the positive electrode contains a positive electrode active material containing a tungsten element, the negative electrode contains a carbon material as a negative electrode active material, a BET specific surface area of the negative electrode active material is 4.4 m²/g or more, and the non-aqueous electrolyte solution contains a compound having a reductive decomposition potential of 0.5 V (vs. Li/Li⁺) or more and 2.0 V (vs. Li/Li⁺) or less and a carboxylic acid ester.

### EFFECT OF THE INVENTION

According to one aspect of the present invention, it is possible to improve a disadvantage that a discharge capacity after charge and discharge cycles is significantly reduced when a negative electrode active material having a large specific surface area is applied in a non-aqueous electrolyte solution energy storage device using a positive electrode active material containing a tungsten element.

### BRIEF DESCRIPTION OF DRAWINGS

[FIG. 1] FIG. 1 is an oblique perspective view illustrating an embodiment of a non-aqueous electrolyte solution energy storage device.
[FIG. 2] FIG. 2 is a schematic view illustrating an embodiment of an energy storage apparatus configured by assembling a plurality of non-aqueous electrolyte solution energy storage devices.
[FIG. 3] FIG. 3 is a graph showing a relationship between a BET specific surface area of a negative electrode active material and an initial output ratio in Examples.
[FIG. 4] FIG. 4 is a graph showing a relationship between the BET specific surface area of the negative electrode active material and a discharge capacity ratio after charge and discharge cycles in Examples.

### DESCRIPTION OF EMBODIMENTS

First, an outline of a non-aqueous electrolyte solution energy storage device disclosed in the present description will be described.

[1] A non-aqueous electrolyte solution energy storage device according to one aspect of the present invention includes: a positive electrode; a negative electrode; and a non-aqueous electrolyte solution, in which the positive electrode contains a positive electrode active material containing a tungsten element, the negative electrode contains a carbon material as a negative electrode active material, a BET specific surface area of the negative electrode active material is 4.4 m²/g or more, and the non-aqueous electrolyte solution contains a compound having a reductive decomposition potential of 0.5 V (vs. Li/Li⁺) or more and 2.0 V (vs. Li/Li⁺) or less and a carboxylic acid ester.

The non-aqueous electrolyte solution energy storage device described in the above [1] can improve a disadvantage that a discharge capacity after charge and discharge cycles is significantly reduced when a negative electrode active material having a large specific surface area is applied in a non-aqueous electrolyte solution energy storage device using a positive electrode active material containing a tungsten element. Although the reason for this is not clear, the following reason is presumed. In a non-aqueous electrolyte solution energy storage device using a positive electrode active material containing a tungsten element, the tungsten element is eluted from the positive electrode active material into a non-aqueous electrolyte solution by the repetition of charge and discharge, and the eluted tungsten element is deposited on a surface of a negative electrode active material. In particular, when a specific surface area of the negative electrode active material is large, the influence of a film due to the deposition of the tungsten element is large, which leads to an increase in resistance of a negative electrode, inhibition of charge and discharge reactions, and the like. Therefore, it is considered that a discharge capacity after charge and discharge cycles is significantly reduced when a negative electrode active material having a large specific surface area is applied in the non-aqueous electrolyte solution energy storage device using a positive electrode active material containing a tungsten element. On the other hand, a compound having a reductive decomposition potential of 0.5 V (vs. Li/Li⁺) or more and 2.0 V (vs. Li/Li⁺) or less (hereinafter, also referred to as "compound (X)") is an additive for a non-aqueous electrolyte solution effective for protection of a negative electrode active material, but is decomposed by charge and discharge. Therefore, when the remaining amount in the non-aqueous electrolyte solution is small, a sufficient effect is not exhibited. Meanwhile, when a carboxylic acid ester is contained together with the compound (X) in the non-aqueous electrolyte solution, the carboxylic acid ester is preferentially decomposed at the time of initial charge and discharge, and the decomposition of the compound (X) is suppressed, because the carboxylic acid ester is relatively easy to be reductively decomposed. Therefore, the compound (X) can sufficiently remain in the non-aqueous electrolyte solution even after the initial charge and discharge. Since the compound (X) is gradually reductively decomposed to protect the negative electrode active material during the subsequent repetition of charge and discharge, the deposition of the tungsten element can be suppressed over a long period of time. For this reason, it is presumed that the non-aqueous electrolyte solution energy storage device described in the above [1] can improve the above-described disadvantage that a discharge capacity after charge and discharge cycles is significantly reduced.

The "BET specific surface area" of the negative electrode active material is measured by the following method. The non-aqueous electrolyte solution energy storage device is disassembled, and the negative electrode is taken out, washed with dimethyl carbonate, and vacuum-dried at room temperature to collect the negative electrode active material. BET specific surface area measurement by a nitrogen adsorption method is performed using the collected negative electrode active material. This measurement is performed by "autosorb iQ" manufactured by Quantachrome Instruments. Five points are extracted from a region of the acquired adsorption isotherm where P/P0 is from 0.06 to 0.3 (P/P0 = 0.06 to 0.3) to perform BET plotting, and the BET specific surface area is calculated from the y-intercept and the slope of the plotted straight line. The operations from the disassembly of the non-aqueous electrolyte solution energy storage device to the collection of the negative electrode active material are all performed in a dry air atmosphere having a dew point of -30°C or less.

The "reductive decomposition potential" means a potential (vs. Li/Li⁺) at a reduction peak (a reduction peak at the most noble potential observed in a first cycle) confirmed from a measurement result by a cyclic voltammetry (CV) method. The CV method is carried out under the following measurement conditions.

### [Measurement Conditions]

Working electrode: graphite
Reference electrode: Li metal
Solvent composition: ethylene carbonate:ethyl methyl carbonate = 3:7 (volume ratio) Electrolyte salt: LiPF₆ (1 mol/dm³)
Temperature: room temperature
Scanning speed: 1 mV/sec
Number of scans: 3 cycles
Scanning range: 0 V (vs. Li/Li⁺) to 3.0 V (vs. Li/Li⁺)

The types of the compound (X) and the carboxylic acid ester (hereinafter, also referred to as "compound (X) and the like") contained in the non-aqueous electrolyte solution and the amounts thereof described below are specified by the following method. The amount of the compound (X) and the like contained in the non-aqueous electrolyte solution is the amount of the compound (X) and the like contained in the non-aqueous electrolyte solution included in the non-aqueous electrolyte solution energy storage device, and is not the amount (so-called charging amount) of the compound (X) and the like contained in the non-aqueous electrolyte solution used in manufacturing the non-aqueous electrolyte solution energy storage device. The non-aqueous electrolyte solution energy storage device according to an aspect of the present invention is completed through initial charge and discharge, and a part of the compound (X) and the like contained in the non-aqueous electrolyte solution used in the manufacturing is decomposed during the initial charge and discharge. Therefore, the amount of the compound (X) and the like contained in the non-aqueous electrolyte solution used in manufacturing the non-aqueous electrolyte solution energy storage device and the amount of the compound (X) and the like contained in the non-aqueous electrolyte solution included in the non-aqueous electrolyte solution energy storage device completed through the initial charge and discharge are not irrelevant to each other, but do not coincide with each other. In other words, the amount of the compound (X) and the like contained in the non-aqueous electrolyte solution is the amount of the compound (X) and the like remaining in the non-aqueous electrolyte solution included in the non-aqueous electrolyte solution energy storage device. Hereinafter, a specific procedure for measuring the type and the amount (amount of substance) of the compound (X) and the like contained in the non-aqueous electrolyte solution will be described.

A mass (a) of the non-aqueous electrolyte solution energy storage device is measured. After that, the non-aqueous electrolyte solution energy storage device is disassembled, and the non-aqueous electrolyte solution is collected. All components other than the non-aqueous electrolyte solution are washed with dimethyl carbonate, and sufficiently vacuum-dried at room temperature. A mass (b) of all components other than the non-aqueous electrolyte solution after vacuum drying is measured. A difference between the mass (a) and the mass (b) is defined as a mass (c) of the non-aqueous electrolyte solution accommodated in a container of the non-aqueous electrolyte solution energy storage device. The operations from the disassembly of the non-aqueous electrolyte solution energy storage device to the measurement of the mass of all components other than the non-aqueous electrolyte solution after vacuum drying are performed in a dry air atmosphere having a dew point of -30°C or less. Meanwhile, a content (% by mass) of the compound (X) and the like in the non-aqueous electrolyte solution is determined by ion chromatography analysis (IC analysis) or gas chromatography-mass spectrometry (GC-MS analysis) using the non-aqueous electrolyte solution collected at the time of disassembly. When the compound (X) and the like are ionic compounds such as salts, a content determined by the IC analysis is adopted. When the compound (X) and the like are non-ionic compounds, a content determined by the GC-MS analysis is adopted. A mass (d) of the compound (X) and the like contained in the non-aqueous electrolyte solution is calculated from the content of the compound (X) and the like in the non-aqueous electrolyte solution and the mass (c) of the non-aqueous electrolyte solution. The mass (d) of the compound (X) and the like contained in the non-aqueous electrolyte solution is divided by a molecular weight of the compound (X) and the like to determine the amount (amount of substance) of the compound (X) and the like contained in the non-aqueous electrolyte solution. When only qualitative analysis of the compound (X) and the like contained in the non-aqueous electrolyte solution is performed, qualitative analysis by IC analysis or GC-MS analysis may be performed using the non-aqueous electrolyte solution collected by disassembling the non-aqueous electrolyte solution energy storage device, without measuring the mass (a) of the non-aqueous electrolyte solution energy storage device and the like.

### [IC Analysis]

Specifically, the IC analysis is performed in the order of the following qualitative analysis and quantitative analysis. As an apparatus for the IC analysis, "Dionex ICS-5000+" manufactured by Thermo Fisher Scientific Inc. is used. Water is used as an eluent. The measurements of IC are continuously performed under the same conditions.

### (Qualitative analysis)

A measurement sample (non-aqueous electrolyte solution) is subjected to the IC analysis. A component contained in the measurement sample is predicted from a peak position of each peak of the obtained ion chromatogram. A known sample of the predicted component (hereinafter, referred to as "predicted component") is subjected to the IC analysis. A retention time of a peak corresponding to each predicted component of the measurement sample is compared with a retention time of a peak of the known sample of each predicted component, and when these retention times coincide with each other, the above prediction is presumed to be correct.

### (Quantitative analysis)

The quantitative analysis is performed by a calibration curve method. First, a known sample of a predicted component having a known content (concentration) is subjected to the IC analysis, and a peak area is determined to prepare a calibration curve. The calibration curve is prepared such that a coefficient of determination (r²) is 0.999 or more and 1 or less. A content of the predicted component in the measurement sample is determined from the calibration curve and the peak area of the predicted component of the measurement sample. The above operation is performed for all peaks detected in the IC analysis of the measurement sample, and the content of each predicted component is determined.

### [GC-MS Analysis]

Specifically, the GC-MS analysis is performed in the order of the following qualitative analysis and quantitative analysis. As an apparatus for the GC-MS analysis, "5975C" manufactured by Agilent Technologies, Inc. is used. Argon is used as a carrier gas. The measurements of GC-MS are continuously performed under the same conditions.

### (Qualitative analysis)

A measurement sample (non-aqueous electrolyte solution) is subjected to the GC-MS analysis. A component contained in the sample is predicted from an MS spectrum of each peak of the obtained gas chromatogram. A known sample of the predicted component is subjected to the GC-MS analysis. A retention time and the MS spectrum of a peak corresponding to each predicted component of the measurement sample are compared with a retention time and an MS spectrum of a peak of the known sample of each predicted component, and when these retention times and the MS spectra coincide with each other, the above prediction is presumed to be correct.

### (Quantitative analysis)

The quantitative analysis is performed by a calibration curve method. First, a known sample of a predicted component having a known content (concentration) is subjected to the GC-MS analysis, and a peak area is determined to prepare a calibration curve. The calibration curve is prepared such that a coefficient of determination (r²) is 0.999 or more and 1 or less. A content of the predicted component in the measurement sample is determined from the calibration curve and the peak area of the predicted component of the measurement sample. The above operation is performed for all peaks detected in the GC-MS analysis of the measurement sample, and the content of each predicted component is determined.

[2] In the non-aqueous electrolyte solution energy storage device described in the above [1], the compound (X) may include at least one selected from the group consisting of vinylene carbonate, fluoroethylene carbonate, vinyl ethylene carbonate, ethylene sulfate, 4,5-pentene sulfate, 4,4'-bis(2,2-dioxo-1,3,2-dioxathiolane), 4-methylsulfonyloxymethyl-2,2-dioxo-1,3,2-dioxathiolane, 1,3-propene sultone, 1,3-propane sultone, lithium bis(oxalate)borate, lithium difluoro(oxalate)borate, and lithium difluorobis(oxalate)phosphate.

According to the non-aqueous electrolyte solution energy storage device described in the above [2], since the predetermined compound (X) is used, the above-described disadvantage that a discharge capacity after charge and discharge cycles is significantly reduced can be sufficiently improved.

[3] In the non-aqueous electrolyte solution energy storage device described in the above [1] or [2], a molar ratio of an amount of the carboxylic acid ester contained in the non-aqueous electrolyte solution to an amount of the tungsten element contained in the positive electrode active material may be 2.0 or more and 7.0 or less.

According to the non-aqueous electrolyte solution energy storage device described in the above [3], since the molar ratio of the amount of the carboxylic acid ester contained in the non-aqueous electrolyte solution to the amount of the tungsten element contained in the positive electrode active material is within the above range, the output retention rate after charge and discharge cycles can be increased.

Measurement of the amount of the tungsten element contained in the positive electrode active material is performed by the following procedure. First, the non-aqueous electrolyte solution energy storage device is subjected to constant-current discharge at a discharge current of 0.05 C to a lower limit voltage at the time of normal use. The non-aqueous electrolyte solution energy storage device is disassembled, the positive electrode is taken out, a test battery using metallic lithium for a counter electrode is assembled, and constant-current discharge is performed at a discharge current of 10 mA per 1 g of the positive electrode active material until a positive electrode potential reaches 3.0 V (vs. Li/Li⁺) to adjust the positive electrode to a completely discharged state. After that, the test battery is disassembled, and the positive electrode is taken out. Components (non-aqueous electrolyte solution and the like) adhering to the positive electrode taken out are sufficiently washed with dimethyl carbonate, and the positive electrode is collected after vacuum-drying at room temperature for 24 hours. From the positive electrode taken out, a positive electrode active material layer is peeled off from a positive electrode substrate using a solvent capable of dissolving a binder, such as N-methylpyrrolidone (NMP), and a constituent of the positive electrode active material layer is collected. The operations from the disassembly of the non-aqueous electrolyte solution energy storage device to the collection of the constituent of the positive electrode active material layer for measurement are performed in an argon atmosphere having a dew point of -60°C or less. The obtained constituent of the positive electrode active material layer is fired at 800°C in an air atmosphere, and a conductive agent and a binder are removed as necessary to collect the positive electrode active material. The positive electrode active material collected by the above-described method is completely dissolved in an acidic solution capable of dissolving the positive electrode active material by a microwave decomposition method. Next, this acidic solution is diluted to a certain amount with pure water to obtain a measurement solution. Then, a concentration of the tungsten element in the measurement solution is measured by high-frequency inductively coupled plasma emission spectrometry (ICP) using a multi-type high-frequency inductively coupled plasma emission spectrometer ICPE-9820 (manufactured by Shimadzu Corporation). A content (% by mass) of the tungsten element in the positive electrode active material is calculated from the obtained concentration of the tungsten element. The amount (mol) of the tungsten element contained in the positive electrode active material is determined from the content (% by mass) of the tungsten element in the positive electrode active material, the mass of the positive electrode active material, and the atomic weight of the tungsten element (183.84). In the calculation of the concentration of the tungsten element in the measurement solution, a calibration curve method in which a calibration curve is prepared from a solution having a known concentration of the tungsten element and the concentration of the tungsten element in the measurement solution is determined is used. "At the time of normal use" refers to a case of using the non-aqueous electrolyte solution energy storage device by adopting charge and discharge conditions recommended or specified for the non-aqueous electrolyte solution energy storage device. When a device for using the non-aqueous electrolyte solution energy storage device is prepared, "at the time of normal use" refers to a case of using the non-aqueous electrolyte solution energy storage device by applying the device.

[4] In the non-aqueous electrolyte solution energy storage device described in any one of the above [1] to [3], a molar ratio of an amount of the carboxylic acid ester contained in the non-aqueous electrolyte solution to an amount of the tungsten element contained in the positive electrode active material may be 4.8 or more.

According to the non-aqueous electrolyte solution energy storage device described in the above [4], since the molar ratio of the amount of the carboxylic acid ester contained in the non-aqueous electrolyte solution to the amount of the tungsten element contained in the positive electrode active material is within the above range, the output after charge and discharge cycles can be increased.

[5] In the non-aqueous electrolyte solution energy storage device described in any one of the above [1] to [4], a molar ratio of an amount of the carboxylic acid ester contained in the non-aqueous electrolyte solution to an amount of the compound (X) contained in the non-aqueous electrolyte solution may be 4.0 or more and 14.4 or less.

According to the non-aqueous electrolyte solution energy storage device described in the above [5], since the molar ratio of the amount of the carboxylic acid ester contained in the non-aqueous electrolyte solution to the amount of the compound (X) contained in the non-aqueous electrolyte solution is within the above range, the output retention rate after charge and discharge cycles can be increased.

[6] In the non-aqueous electrolyte solution energy storage device described in any one of the above [1] to [5], a molar ratio of an amount of the carboxylic acid ester contained in the non-aqueous electrolyte solution to an amount of the compound (X) contained in the non-aqueous electrolyte solution may be 9.9 or more.

According to the non-aqueous electrolyte solution energy storage device described in the above [6], since the molar ratio of the amount of the carboxylic acid ester contained in the non-aqueous electrolyte solution to the amount of the compound (X) contained in the non-aqueous electrolyte solution is within the above range, the output after charge and discharge cycles can be increased.

A non-aqueous electrolyte solution energy storage device, an energy storage apparatus, and a method for manufacturing a non-aqueous electrolyte solution energy storage device according to an embodiment of the present invention, and other embodiments of the present invention will be described in detail. The names of constituent members (components) used in the embodiments may be different from the names of constituent members (components) used in the background art.

### <Non-aqueous Electrolyte Solution Energy Storage Device>

A non-aqueous electrolyte solution energy storage device (hereinafter, also simply referred to as "energy storage device") according to an embodiment of the present invention includes an electrode body having a positive electrode, a negative electrode, and a separator, a non-aqueous electrolyte solution, and a container for accommodating the electrode body and the non-aqueous electrolyte solution. The electrode body is usually of a stacked type in which a plurality of positive electrodes and a plurality of negative electrodes are stacked with separators interposed therebetween, or of a wound type in which a positive electrode and a negative electrode are wound in a state of being stacked with a separator interposed therebetween. At least a part of the non-aqueous electrolyte solution is present in a state of being impregnated in the positive electrode, the negative electrode, and the separator. A part of the non-aqueous electrolyte solution may be present as an excess electrolyte solution outside the electrode body, in other words, between the electrode body and the container. The container may be, for example, a metal container made of aluminum, stainless steel, or the like, or a resin container. As an example of the non-aqueous electrolyte solution energy storage device, a non-aqueous electrolyte solution secondary battery (hereinafter, also simply referred to as "secondary battery") will be described.

### (Positive electrode)

The positive electrode includes a positive electrode substrate and a positive electrode active material layer arranged on the positive electrode substrate directly or via an intermediate layer.

The positive electrode substrate has conductivity. The presence or absence of "conductivity" is determined using a volume resistivity of 10⁻² Ω·cm measured in accordance with JIS H 0505:1975 as a threshold value. As the material of the positive electrode substrate, a metal such as aluminum, titanium, tantalum, or stainless steel, or an alloy thereof is used. Among them, aluminum or an aluminum alloy is preferable from the viewpoint of potential resistance, high conductivity, and cost. Examples of the positive electrode substrate include a foil, a vapor-deposited film, a mesh, and a porous material, and a foil is preferable from the viewpoint of cost. Therefore, an aluminum foil or an aluminum alloy foil is preferable as the positive electrode substrate. Examples of aluminum or the aluminum alloy include A1085, A3003, and A1N30 specified in JIS H 4000:2014 or JIS H 4160:2006.

An average thickness of the positive electrode substrate is preferably 3 µm or more and 50 µm or less, more preferably 5 µm or more and 40 µm or less, still more preferably 8 µm or more and 30 µm or less, and particularly preferably 10 µm or more and 25 µm or less. When the average thickness of the positive electrode substrate is set to be within the above range, the energy density per volume of the non-aqueous electrolyte solution energy storage device can be increased while increasing the strength of the positive electrode substrate.

The intermediate layer is a layer arranged between the positive electrode substrate and the positive electrode active material layer. The intermediate layer reduces the contact resistance between the positive electrode substrate and the positive electrode active material layer by containing a conductive agent such as carbon particles. The configuration of the intermediate layer is not particularly limited, and contains, for example, a binder and a conductive agent.

The positive electrode active material layer contains a positive electrode active material. The positive electrode active material layer contains, as necessary, optional components such as a conductive agent, a binder, a thickener, and a filler.

The positive electrode active material contains a tungsten element. The tungsten element may be present, for example, in a state of a compound such as an oxide (WO₃). A compound containing the tungsten element may cover, for example, at least a part of a surface of particles of a substance capable of occluding and releasing charge-transporting ions such as lithium ions. In other words, the positive electrode active material may contain a substance capable of occluding and releasing charge-transporting ions and a compound containing the tungsten element. The positive electrode active material may be substantially composed of only a substance capable of occluding and releasing charge-transporting ions and a compound containing the tungsten element. The substance capable of occluding and releasing charge-transporting ions itself may contain the tungsten element. The tungsten element may be present, for example, on a surface of particles of the positive electrode active material. The tungsten element may be present inside the particles of the positive electrode active material. As described above, since the positive electrode active material contains the tungsten element, a side reaction at the positive electrode can be suppressed, and the conductivity of the charge-transporting ions such as lithium ions can be improved. As a result, the initial output and the like of the non-aqueous electrolyte solution energy storage device can be increased. Examples of a method of incorporating the tungsten element into the positive electrode active material include a method of coating the surface of particles of a substance capable of occluding and releasing charge-transporting ions with a compound containing the tungsten element. Further, the examples include a method of adding the tungsten element at the time of synthesizing a substance capable of occluding and releasing charge-transporting ions and then performing sintering, thereby causing a compound containing the tungsten element to be supported on the surface of the particles of the positive electrode active material or contained within the particles. As the positive electrode active material containing the tungsten element, a commercially available product may be used.

As the substance capable of occluding and releasing charge-transporting ions, substances capable of occluding and releasing lithium ions are preferable, and a conventionally known material can be used as such substances. Examples of such substances include lithium-transition metal composite oxides having an α-NaFeO₂-type crystal structure, lithium-transition metal composite oxides having a spinel-type crystal structure, polyanion compounds, chalcogen compounds, and sulfur. Examples of the lithium-transition metal composite oxides having an α-NaFeO₂-type crystal structure include Li[LiₓNi₍₁₋ₓ₎]O₂ (0 ≤ x < 0.5), Li[LiₓNi_{γ}Co_{(1-x-γ)}]O₂ (0 ≤ x < 0.5, 0 < γ < 1, 0 < 1-x-γ), Li[LiₓCo₍₁₋ₓ₎]O₂ (0 ≤ x < 0.5), Li[LiₓNi_{γ}Mn_{(1-x-γ)}]O₂ (0 ≤ x < 0.5, 0 < γ < 1, 0 < 1-x-γ), Li[LiₓNi_{γ}MnβCo_{(1-x-γ-β)}]O₂ (0 ≤ x < 0.5, 0 < γ, 0 < β, 0.5 < γ+β < 1, 0 < 1-x-γ-β), and Li[LiₓNi_{γ}Co_{β}Al_{(1-x-γ-β)}]O₂ (0 ≤ x < 0.5, 0 < γ, 0 < β, 0.5 < γ+β < 1, 0 < 1-x-γ-β). Examples of the lithium-transition metal composite oxides having a spinel-type crystal structure include LiₓMn₂O₄ and LiₓNi_{γ}Mn_{(2-γ)}O₄. Examples of the polyanion compounds include LiFePO₄, LiMnPO₄, LiNiPO₄, LiCoPO₄, Li₃V₂(PO₄)₃, Li₂MnSiO₄, and Li₂CoPO₄F. Examples of the chalcogen compounds include titanium disulfide, molybdenum disulfide, and molybdenum dioxide. Atoms or polyanions in these materials may be partially substituted with atoms or anion species of other elements. One of these materials may be used alone, or two or more of these materials may be mixed and used.

As the substance capable of occluding and releasing charge-transporting ions, among them, lithium-transition metal composite oxides are preferable, lithium-transition metal composite oxides having an α-NaFeO₂-type crystal structure are more preferable, lithium-transition metal composite oxides containing at least one selected from the group consisting of a nickel element, a cobalt element, and a manganese element and having an α-NaFeO₂-type crystal structure are still more preferable, and lithium-transition metal composite oxides containing a nickel element, a cobalt element, and a manganese element and having an α-NaFeO₂-type crystal structure are still further preferable. Examples of such lithium-transition metal composite oxides include Li[LiₓNi_{γ}MnβCo_{(1-x-γ-β)}]O₂ (0 ≤ x < 0.5, 0 < γ, 0 < β, 0.5 < γ+β < 1, 0 < 1-x-γ-β), and 0.1 ≤ γ < 0.9 and 0.1 ≤ β < 0.9 are preferable in Li[LiₓNi_{γ}MnβCo_{(1-x-γ-β)}]O₂ described above. When such a substance is used, the effect of improving the output by the tungsten element is particularly sufficiently exhibited.

The positive electrode active material preferably further contains a transition metal element other than the tungsten element. When a lithium-transition metal composite oxide, a polyanion compound, or the like is used as the substance capable of occluding and releasing charge-transporting ions, the positive electrode active material further contains a transition metal element other than the tungsten element. Examples of the transition metal element other than the tungsten element include a nickel element, a manganese element, a cobalt element, and an iron element. The positive electrode active material preferably contains at least one selected from the group consisting of a nickel element, a manganese element, and a cobalt element, and more preferably contains a nickel element, a manganese element, and a cobalt element. A content of the tungsten element relative to all the transition metal elements other than the tungsten element in the positive electrode active material is preferably 0.2 mol% or more and 3 mol% or less, and more preferably 0.5 mol% or more and 2 mol% or less (for example, 0.8 mol% or more and 2 mol% or less, 1 mol% or more and 2 mol% or less). When the content of the tungsten element is set to the above-described lower limit or more, the effect by the tungsten element in the positive electrode active material is sufficiently exhibited, and the initial output and the like further increase. On the other hand, when the content of the tungsten element is set to the above-described upper limit or less, a discharge capacity can be increased, for example.

The positive electrode active material is usually in the form of particles (powder). An average particle size of the positive electrode active material is preferably, for example, 0.1 µm or more and 20 µm or less. When the average particle size of the positive electrode active material is set to the above-described lower limit or more, the positive electrode active material is easily manufactured or handled. When the average particle size of the positive electrode active material is set to the above-described upper limit or less, the electron conductivity of the positive electrode active material layer is improved. When a composite of the positive electrode active material and another material is used, the average particle size of the composite is defined as the average particle size of the positive electrode active material. The "average particle size" means a value at which a volume-based cumulative distribution calculated in accordance with JIS Z 8819-2:2001 is 50% on the basis of a particle size distribution measured by a laser diffraction and scattering method for a diluted solution obtained by diluting particles with a solvent in accordance with JIS Z 8825:2013.

In order to obtain powder having a predetermined particle size, a pulverizer, a classifier, or the like is used. Examples of a method of pulverization include a method using a mortar, a ball mill, a sand mill, a vibrating ball mill, a planetary ball mill, a jet mill, an opposed jet mill, a spiral jet mill, a sieve, or the like. At the time of pulverization, wet pulverization in the presence of water or an organic solvent such as hexane can also be used. As a method of classification, a sieve, an air classifier, or the like is used as necessary in both a dry method and a wet method.

A content of the positive electrode active material in the positive electrode active material layer is preferably 50% by mass or more and 99% by mass or less, more preferably 70% by mass or more and 98% by mass or less, and still more preferably 80% by mass or more and 95% by mass or less. When the content of the positive electrode active material is set to be within the above range, both high energy density and manufacturability of the positive electrode active material layer can be achieved.

The conductive agent is not particularly limited as long as it is a material having conductivity. Examples of such a conductive agent include carbon materials, metals, and conductive ceramics. Examples of the carbon materials include graphite, non-graphitic carbon, and graphene-based carbon. Examples of the non-graphitic carbon include carbon nanofibers, pitch-based carbon fibers, and carbon black. Examples of the carbon black include furnace black, acetylene black, and Ketjen black. Examples of the graphene-based carbon include graphene, carbon nanotubes (CNTs), and fullerenes. Examples of the form of the conductive agent include a powdery form and a fibrous form. As the conductive agent, one of these materials may be used alone, or two or more of these materials may be mixed and used. Further, these materials may be used in combination. For example, a composite material of carbon black and a CNT may be used. Among them, carbon black is preferable and acetylene black is particularly preferable from the viewpoint of electron conductivity and coatability.

A content of the conductive agent in the positive electrode active material layer is preferably 1% by mass or more and 10% by mass or less, and more preferably 3% by mass or more and 9% by mass or less. When the content of the conductive agent is set to be within the above range, the energy density of the non-aqueous electrolyte solution energy storage device can be increased.

Examples of the binder include thermoplastic resins such as fluororesins (polytetrafluoroethylene (PTFE), polyvinylidene fluoride (PVDF), and the like), polyethylene, polypropylene, polyacrylate, and polyimide; elastomers such as ethylene-propylene-diene rubber (EPDM), sulfonated EPDM, styrene-butadiene rubber (SBR), and fluoro-rubber; and polysaccharide polymers.

A content of the binder in the positive electrode active material layer is preferably 0.5% by mass or more and 10% by mass or less, and more preferably 1% by mass or more and 9% by mass or less. When the content of the binder is set to be within the above range, the positive electrode active material can be stably held.

Examples of the thickener include polysaccharide polymers such as carboxymethyl cellulose (CMC) and methyl cellulose. When the thickener has a functional group that reacts with lithium or the like, this functional group may be deactivated in advance by methylation or the like.

A content of the thickener in the positive electrode active material layer may be, for example, 0.1% by mass or more and 6% by mass or less, or may be 0.5% by mass or more and 3% by mass or less. The content of the thickener in the positive electrode active material layer may be 1% by mass or less, and the thickener may not be contained in the positive electrode active material layer.

The filler is not particularly limited. Examples of the filler include polyolefins such as polypropylene and polyethylene; inorganic oxides such as silicon dioxide, alumina, titanium dioxide, calcium oxide, strontium oxide, barium oxide, magnesium oxide, and aluminosilicate; hydroxides such as magnesium hydroxide, calcium hydroxide, and aluminum hydroxide; carbonates such as calcium carbonate; sparingly soluble ionic crystals such as calcium fluoride, barium fluoride, and barium sulfate; nitrides such as aluminum nitride and silicon nitride; and substances derived from mineral resources such as talc, montmorillonite, boehmite, zeolite, apatite, kaolin, mullite, spinel, olivine, sericite, bentonite, and mica or synthetic substances thereof.

A content of the filler in the positive electrode active material layer may be, for example, 0.1% by mass or more and 8% by mass or less, or may be 0.5% by mass or more and 5% by mass or less. The content of the filler in the positive electrode active material layer may be 3% by mass or less, or may be 1% by mass or less, and the filler may not be contained in the positive electrode active material layer.

The positive electrode active material layer may contain typical non-metal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, and Nb, as components other than the positive electrode active material, the conductive agent, the binder, the thickener, and the filler.

### (Negative electrode)

The negative electrode includes a negative electrode substrate and a negative electrode active material layer arranged on the negative electrode substrate directly or via an intermediate layer. The configuration of the intermediate layer is not particularly limited, and can be selected from the configurations exemplified for the positive electrode, for example.

The negative electrode substrate has conductivity. As the material of the negative electrode substrate, a metal such as copper, nickel, stainless steel, or nickel-plated steel, an alloy thereof, a carbonaceous material, or the like is used. Among them, copper or a copper alloy is preferable. Examples of the negative electrode substrate include a foil, a vapor-deposited film, a mesh, and a porous material, and a foil is preferable from the viewpoint of cost. Therefore, a copper foil or a copper alloy foil is preferable as the negative electrode substrate. Examples of the copper foil include a rolled copper foil and an electrolytic copper foil.

An average thickness of the negative electrode substrate is preferably 2 µm or more and 35 µm or less, more preferably 3 µm or more and 30 µm or less, still more preferably 4 µm or more and 25 µm or less, and particularly preferably 5 µm or more and 20 µm or less. When the average thickness of the negative electrode substrate is set to be within the above range, the energy density per volume of the non-aqueous electrolyte solution energy storage device can be increased while increasing the strength of the negative electrode substrate.

The negative electrode active material layer contains a negative electrode active material. The negative electrode active material layer contains, as necessary, optional components such as a conductive agent, a binder, a thickener, and a filler.

The negative electrode active material layer may contain typical non-metal elements such as B, N, P, F, Cl, Br, and I, typical metal elements such as Li, Na, Mg, Al, K, Ca, Zn, Ga, Ge, Sn, Sr, and Ba, and transition metal elements such as Sc, Ti, V, Cr, Mn, Fe, Co, Ni, Cu, Mo, Zr, Ta, Hf, Nb, and W, as components other than the negative electrode active material, the conductive agent, the binder, the thickener, and the filler.

The negative electrode active material contains a carbon material. The carbon material refers to a material having a carbon element as a main constituent element. The main constituent element refers to an element having the largest content on a mass basis. For example, the content of the carbon element in the carbon material may be 80% by mass or more, 90% by mass or more, 95% by mass or more, or 99% by mass or more. Examples of the carbon material as the negative electrode active material include graphite and non-graphitic carbon, and graphite is preferable. Graphite may have a surface coated with another material such as non-graphitic carbon. As the carbon material as the negative electrode active material, one type or two or more types can be used.

"Graphite" refers to a carbon material in which the average interplanar spacing (d₀₀₂) of the (002) plane, determined by an X-ray diffraction method in a state before charge and discharge or in a discharged state, is 0.33 nm or more and less than 0.34 nm. Examples of graphite include natural graphite and artificial graphite.

"Non-graphitic carbon" refers to a carbon material in which the average interplanar spacing (d₀₀₂) of the (002) plane, determined by an X-ray diffraction method in a state before charge and discharge or in a discharged state, is 0.34 nm or more and 0.42 nm or less. Examples of the non-graphitic carbon include non-graphitizable carbon and graphitizable carbon. "Non-graphitizable carbon" refers to a carbon material in which the d₀₀₂ is 0.36 nm or more and 0.42 nm or less. "Graphitizable carbon" refers to a carbon material in which the d₀₀₂ is 0.34 nm or more and less than 0.36 nm.

Here, the "discharged state" of the carbon material means a state in which the carbon material serving as a negative electrode active material is discharged such that charge-transporting ions capable of being occluded and released during charge and discharge are sufficiently released. For example, in a half cell using, as a working electrode, a negative electrode containing a carbon material as a negative electrode active material and using metallic lithium as a counter electrode, the "discharged state" is a state in which an open circuit voltage is 0.6 V or more.

An average particle size of the carbon material as the negative electrode active material is, for example, preferably 1 µm or more and 30 µm or less, and more preferably 3 µm or more and 20 µm or less. When the average particle size of the carbon material is within the above range, the charge and discharge performance of the non-aqueous electrolyte solution energy storage device can be increased, for example. In order for the carbon material to have a predetermined particle size, a pulverizer, a classifier, or the like is used. A method of pulverization and a method of classification can be selected from the methods exemplified for the positive electrode, for example.

As the negative electrode active material, another negative electrode active material may be used together with the carbon material. As the another negative electrode active material, a conventionally known negative electrode active material can be used. However, in an embodiment of the present invention, a content of the carbon material relative to all the negative electrode active materials is preferably 90% by mass or more, more preferably 99% by mass or more, and may be 100% by mass.

A lower limit of the BET specific surface area of the negative electrode active material is 4.4 m²/g, and may be 4.6 m²/g, 4.8 m²/g, 5.0 m²/g, 5.2 m²/g, or 5.4 m²/g. When the BET specific surface area of the negative electrode active material is the above-described lower limit or more, the initial output can be increased, for example. An upper limit of the BET specific surface area of the negative electrode active material may be, for example, 10.0 m²/g, and may be 9.0 m²/g, 8.0 m²/g, 7.0 m²/g, 6.0 m²/g, 5.5 m²/g, 5.2 m²/g, or 5.0 m²/g. The BET specific surface area of the negative electrode active material may be a combination of any of the above-described lower limits and any of the above-described upper limits (provided that the upper limit is larger than the lower limit).

A content of the carbon material in the negative electrode active material layer is preferably 60% by mass or more and 99.5% by mass or less, and more preferably 90% by mass or more and 99% by mass or less (for example, 95% by mass or more and 99% by mass or less). Further, a content of all the negative electrode active materials in the negative electrode active material layer is preferably 60% by mass or more and 99.5% by mass or less, and more preferably 90% by mass or more and 99% by mass or less (for example, 95% by mass or more and 99% by mass or less). When the content of the carbon material or all the negative electrode active materials is set to be within the above range, both high energy density and manufacturability of the negative electrode active material layer can be achieved.

The conductive agent, the binder, the thickener, the filler, and the like, which are optional components in the negative electrode active material layer, can be selected from the materials exemplified for the positive electrode. However, the carbon material contained in the negative electrode active material layer is not included in the conductive agent.

A content of the conductive agent in the negative electrode active material layer may be 3% by mass or less or 1% by mass or less, and the conductive agent may not be contained in the negative electrode active material layer.

A content of the binder in the negative electrode active material layer is preferably 0.5% by mass or more and 5% by mass or less, and more preferably 0.8% by mass or more and 3% by mass or less.

A content of the thickener in the negative electrode active material layer is preferably 0.1% by mass or more and 6% by mass or less, and more preferably 0.5% by mass or more and 3% by mass or less.

A content of the filler in the negative electrode active material layer may be, for example, 0.1% by mass or more and 8% by mass or less, or may be 0.5% by mass or more and 5% by mass or less. The content of the filler in the negative electrode active material layer may be 3% by mass or less, or may be 1% by mass or less, and the filler may not be contained in the negative electrode active material layer.

### (Separator)

The separator can be appropriately selected from known separators. As the separator, for example, a separator formed of only a substrate layer, a separator in which a heat-resistant layer containing heat-resistant particles and a binder is formed on one surface or both surfaces of a substrate layer, or the like can be used. Examples of the form of the substrate layer of the separator include a woven fabric, a nonwoven fabric, and a porous resin film. Among these forms, a porous resin film is preferable from the viewpoint of strength, and a nonwoven fabric is preferable from the viewpoint of liquid retainability of the non-aqueous electrolyte solution. As the material of the substrate layer of the separator, for example, polyolefins such as polyethylene and polypropylene are preferable from the viewpoint of a shutdown function, and for example, polyimide, aramid, and the like are preferable from the viewpoint of oxidative decomposition resistance. As the substrate layer of the separator, a composite material of these resins may be used.

The heat-resistant particles contained in the heat-resistant layer preferably have a mass loss of 5% or less when the temperature is raised from room temperature to 500°C in an air atmosphere at 1 atm, and more preferably have a mass loss of 5% or less when the temperature is raised from room temperature to 800°C. Examples of a material having a mass loss of a predetermined amount or less include inorganic compounds. Examples of the inorganic compounds include oxides such as iron oxide, silicon oxide, aluminum oxide, titanium oxide, zirconium oxide, calcium oxide, strontium oxide, barium oxide, magnesium oxide, and aluminosilicate; nitrides such as aluminum nitride and silicon nitride; carbonates such as calcium carbonate; sulfates such as barium sulfate; sparingly soluble ionic crystals such as calcium fluoride, barium fluoride, and barium titanate; covalent crystals such as silicon and diamond; and substances derived from mineral resources such as talc, montmorillonite, boehmite, zeolite, apatite, kaolin, mullite, spinel, olivine, sericite, bentonite, and mica or synthetic substances thereof. As the inorganic compound, a simple substance or a composite of these substances may be used alone, or two or more of these substances may be mixed and used. Among these inorganic compounds, silicon oxide, aluminum oxide, or aluminosilicate is preferable from the viewpoint of safety of the non-aqueous electrolyte solution energy storage device.

A porosity of the separator is preferably 80% by volume or less from the viewpoint of strength, and is preferably 20% by volume or more from the viewpoint of discharge performance. Here, the "porosity" is a value based on volume, and means a value measured by a mercury porosimeter.

As the separator, a polymer gel composed of a polymer and a non-aqueous electrolyte solution may be used. Examples of the polymer include polyacrylonitrile, polyethylene oxide, polypropylene oxide, polymethyl methacrylate, polyvinyl acetate, polyvinylpyrrolidone, and polyvinylidene fluoride. The use of the polymer gel has an effect of suppressing liquid leakage. As the separator, a porous resin film, a nonwoven fabric, or the like as described above may be used in combination with the polymer gel.

### (Non-aqueous electrolyte solution)

The non-aqueous electrolyte solution contains a compound (X) (a compound having a reductive decomposition potential of 0.5 V (vs. Li/Li⁺) or more and 2.0 V (vs. Li/Li⁺) or less) and a carboxylic acid ester.

The compound (X) preferably contains at least one selected from the group consisting of vinylene carbonate (reductive decomposition potential 0.64 V (vs. Li/Li⁺)), fluoroethylene carbonate, vinyl ethylene carbonate, ethylene sulfate, 4,5-pentene sulfate (reductive decomposition potential 0.95 V (vs. Li/Li⁺)), 4,4'-bis(2,2-dioxo-1,3,2-dioxathiolane) (reductive decomposition potential 0.60 V (vs. Li/Li⁺)), 4-methylsulfonyloxymethyl-2,2-dioxo-1,3,2-dioxathiolane, 1,3-propene sultone (reductive decomposition potential 1.09 V (vs. Li/Li⁺)), 1,3-propane sultone, lithium bis(oxalate)borate (reductive decomposition potential 1.70 V (vs. Li/Li⁺)), lithium difluoro(oxalate)borate, and lithium difluorobis(oxalate)phosphate (reductive decomposition potential 1.90 V (vs. Li/Li⁺)), more preferably contains at least one selected from the group consisting of vinylene carbonate and lithium bis(oxalate)borate, and still more preferably is vinylene carbonate and lithium bis(oxalate)borate. By using these compounds as the compound (X), a disadvantage that a discharge capacity after charge and discharge cycles is significantly reduced can be particularly sufficiently improved. It has been confirmed that the reductive decomposition potential is 0.5 V (vs. Li/Li⁺) or more and 2.0 V (vs. Li/Li⁺) or less even in a compound whose reductive decomposition potential is not described among the respective compounds exemplified as the compound (X).

The compound (X) may be cyclic carbonates having a reductive decomposition potential of 0.5 V (vs. Li/Li⁺) or more and 2.0 V (vs. Li/Li⁺) or less, sulfates having a reductive decomposition potential of 0.5 V (vs. Li/Li⁺) or more and 2.0 V (vs. Li/Li⁺) or less, sultones having a reductive decomposition potential of 0.5 V (vs. Li/Li⁺) or more and 2.0 V (vs. Li/Li⁺) or less, lithium oxalates having a reductive decomposition potential of 0.5 V (vs. Li/Li⁺) or more and 2.0 V (vs. Li/Li⁺) or less, or lithium imide salts having a reductive decomposition potential of 0.5 V (vs. Li/Li⁺) or more and 2.0 V (vs. Li/Li⁺) or less. The compound (X) may be cyclic carbonates having a reductive decomposition potential of 0.5 V (vs. Li/Li⁺) or more and 2.0 V (vs. Li/Li⁺) or less and lithium oxalates having a reductive decomposition potential of 0.5 V (vs. Li/Li⁺) or more and 2.0 V (vs. Li/Li⁺) or less.

Examples of the cyclic carbonates having a reductive decomposition potential of 0.5 V (vs. Li/Li⁺) or more and 2.0 V (vs. Li/Li⁺) or less include vinylene carbonate, fluoroethylene carbonate, and vinyl ethylene carbonate. Examples of the sulfates having a reductive decomposition potential of 0.5 V (vs. Li/Li⁺) or more and 2.0 V (vs. Li/Li⁺) or less include ethylene sulfate, 4,5-pentene sulfate, 4,4'-bis(2,2-dioxo-1,3,2-dioxathiolane), and 4-methylsulfonyloxymethyl-2,2-dioxo-1,3,2-dioxathiolane. Examples of the sultones having a reductive decomposition potential of 0.5 V (vs. Li/Li⁺) or more and 2.0 V (vs. Li/Li⁺) or less include 1,3-propene sultone and 1,3-propane sultone. Examples of the lithium oxalates having a reductive decomposition potential of 0.5 V (vs. Li/Li⁺) or more and 2.0 V (vs. Li/Li⁺) or less include lithium bis(oxalate)borate, lithium difluoro(oxalate)borate, and lithium difluorobis(oxalate)phosphate. As the compound (X), one type or two or more types can be used.

In a preferred aspect, the compound (X) may contain a compound (X1) having a reductive decomposition potential of 0.5 V (vs. Li/Li⁺) or more and less than 1.2 V (vs. Li/Li⁺). In another preferred aspect, the compound (X) may contain a compound (X2) having a reductive decomposition potential of 1.2 V (vs. Li/Li⁺) or more and 2.0 V (vs. Li/Li⁺) or less. In another preferred aspect, the compound (X) may contain the compound (X1) having a reductive decomposition potential of 0.5 V (vs. Li/Li⁺) or more and less than 1.2 V (vs. Li/Li⁺) and the compound (X2) having a reductive decomposition potential of 1.2 V (vs. Li/Li⁺) or more and 2.0 V (vs. Li/Li⁺) or less. Examples of the compound (X1) include cyclic carbonates, sulfates, and sultones having a reductive decomposition potential of 0.5 V (vs. Li/Li⁺) or more and less than 1.2 V (vs. Li/Li⁺). Among them, as the compound (X1), cyclic carbonates having a reductive decomposition potential of 0.5 V (vs. Li/Li⁺) or more and less than 1.2 V (vs. Li/Li⁺) are preferable. The reductive decomposition potential of the compound (X1) may be 0.5 V (vs. Li/Li⁺) or more and 0,8 V (vs. Li/Li⁺) or less. Examples of the compound (X2) include lithium oxalates and lithium imide salts having a reductive decomposition potential of 1.2 V (vs. Li/Li⁺) or more and 2.0 V (vs. Li/Li⁺) or less. Among them, as the compound (X2), lithium oxalates having a reductive decomposition potential of 1.2 V (vs. Li/Li⁺) or more and 2.0 V (vs. Li/Li⁺) or less are preferable. The reductive decomposition potential of the compound (X2) may be 1.5 V (vs. Li/Li⁺) or more and 2,0 V (vs. Li/Li⁺) or less. When the compound (X) contains both the compound (X1) and the compound (X2), a lower limit of a molar ratio (X1/X2) of the amount of the compound (X2) contained in the non-aqueous electrolyte solution to the amount of the compound (X1) contained in the non-aqueous electrolyte solution may be, for example, 0.5, and may be 1.0, 1.5, 2.0, or 2.5. On the other hand, an upper limit of the molar ratio (X1/X2) may be, for example, 10.0, and may be 9.0, 8.0, 7.0, 6.0, 5.0, or 4.0. The molar ratio (X1/X2) may be a combination of any of the above-described lower limits and any of the above-described upper limits (provided that the upper limit is larger than the lower limit).

A content of the compound (X) in the non-aqueous electrolyte solution is preferably 0.02% by mass or more and 5.0% by mass or less, more preferably 0.05% by mass or more and 4.0% by mass or less, still more preferably 0.1% by mass or more and 3.0% by mass or less, still further preferably 0.2% by mass or more and 2.0% by mass or less, particularly preferably 0.3% by mass or more and 1.0% by mass or less, and further 0.4% by mass or more and 0.7% by mass or less. When the content of the compound (X) is within the above range, a disadvantage that a discharge capacity after charge and discharge cycles is significantly reduced can be more sufficiently improved. When the compound (X) contains the compound (X1), a content of the compound (X1) in the non-aqueous electrolyte solution may be 0.02% by mass or more and 2.0% by mass or less, 0.08% by mass or more and 1.5% by mass or less, 0.12% by mass or more and 1.0% by mass or less, or 0.15% by mass or more and 0.5% by mass or less. When the compound (X) contains the compound (X2), a content of the compound (X2) in the non-aqueous electrolyte solution may be 0.03% by mass or more and 3.0% by mass or less, 0.1% by mass or more and 2.0% by mass or less, 0.2% by mass or more and 1.5% by mass or less, 0.3% by mass or more and 1.0% by mass or less, or 0.35% by mass or more and 0.8% by mass or less. When the compound (X) contains both the compound (X1) and the compound (X2), the content of the compound (X2) in the non-aqueous electrolyte solution may be larger than the content of the compound (X1) in the non-aqueous electrolyte solution. The content of the compound (X2) in the non-aqueous electrolyte solution may be larger than the content of the compound (X1) in the non-aqueous electrolyte solution by 0.1% by mass or more.

The carboxylic acid ester has a function of suppressing consumption of the compound (X) in the initial charge and discharge stage and reducing the initial resistance of the non-aqueous electrolyte solution energy storage device by film formation on the surface of the negative electrode active material, and further has a function of increasing the output after charge and discharge cycles and a function of increasing the output retention rate after charge and discharge cycles when the positive electrode contains the positive electrode active material containing the tungsten element. Examples of the carboxylic acid ester include acetic acid esters such as methyl acetate, ethyl acetate, and propyl acetate, and propionic acid esters such as methyl propionate, ethyl propionate, and propyl propionate. As the carboxylic acid ester, propionic acid esters are preferable, propionic acid alkyl esters are more preferable, and methyl propionate is still more preferable. By using such a carboxylic acid ester, a disadvantage that a discharge capacity after charge and discharge cycles is significantly reduced can be sufficiently improved, and in addition, the initial output also tends to increase. As the carboxylic acid ester, carboxylic acid alkyl esters are also preferable. Further, from the viewpoint of the reductive decomposition potential, as the carboxylic acid ester, methyl propionate and methyl acetate having a reductive decomposition potential of about 0.5 V (vs. Li/Li⁺) are also preferable. As the carboxylic acid ester, one type or two or more types can be used.

A content of the carboxylic acid ester in the non-aqueous electrolyte solution is preferably 0.1% by mass or more and 20% by mass or less, more preferably 0.3% by mass or more and 10% by mass or less, still more preferably 0.5% by mass or more and 6.0% by mass or less, and still further preferably 1.0% by mass or more and 5.0% by mass or less. When the content of the carboxylic acid ester is within the above range, a disadvantage that a discharge capacity after charge and discharge cycles is significantly reduced can be more sufficiently improved, for example. A lower limit of the content of the carboxylic acid ester in the non-aqueous electrolyte solution may be 1.5% by mass, 2.0% by mass, 2.5% by mass, or 3.0% by mass. When the content of the carboxylic acid ester in the non-aqueous electrolyte solution is the above-described lower limit or more, the output after charge and discharge cycles tends to increase. An upper limit of the content of the carboxylic acid ester in the non-aqueous electrolyte solution may be 4.0% by mass, 3.5% by mass, 3.0% by mass, 2.5% by mass, or 2.0% by mass. When the content of the carboxylic acid ester in the non-aqueous electrolyte solution is the above-described upper limit or less, the output retention rate after charge and discharge cycles tends to increase. The content of the carboxylic acid ester in the non-aqueous electrolyte solution may be a combination of any of the above-described lower limits and any of the above-described upper limits (provided that the upper limit is larger than the lower limit).

A lower limit of a molar ratio (CE/W) of the amount of the carboxylic acid ester (CE) contained in the non-aqueous electrolyte solution to the amount of the tungsten element (W) contained in the positive electrode active material may be, for example, 1.0, and may be 2.0, 3.0, 4.0, or 4.8. When the molar ratio (CE/W) is set to the above-described lower limit or more, the output after charge and discharge cycles tends to increase. On the other hand, an upper limit of the molar ratio (CE/W) may be, for example, 10.0, and may be 9.0, 8.0, 7.0, 6.0, 5.0, or 4.0. When the molar ratio (CE/W) is set to the above-described upper limit or less, the output retention rate after charge and discharge cycles tends to increase. From the viewpoint of, for example, increasing the output retention rate after charge and discharge cycles, the molar ratio (CE/W) may be 2.0 or more and 7.0 or less. In addition, the molar ratio (CE/W) may be a combination of any of the above-described lower limits and any of the above-described upper limits (provided that the upper limit is larger than the lower limit).

A lower limit of a molar ratio (CE/X) of the amount of the carboxylic acid ester (CE) contained in the non-aqueous electrolyte solution to the amount of the compound (X) contained in the non-aqueous electrolyte solution may be, for example, 2.0, and may be 4.0, 6.0, 8.0, or 9.9. When the molar ratio (CE/X) is set to the above-described lower limit or more, the output after charge and discharge cycles tends to increase. On the other hand, an upper limit of the molar ratio (CE/X) may be, for example, 20.0, and may be 15.0, 14.4, 12.0, 10.0, or 8.0. When the molar ratio (CE/X) is set to the above-described upper limit or less, the output retention rate after charge and discharge cycles tends to increase. From the viewpoint of, for example, increasing the output retention rate after charge and discharge cycles, the molar ratio (CE/X) may be 4.0 or more and 14.4 or less. In addition, the molar ratio (CE/X) may be a combination of any of the above-described lower limits and any of the above-described upper limits (provided that the upper limit is larger than the lower limit). The molar ratio (CE/X) is equal to a molar concentration of the compound (X) relative to a molar concentration of the compound (X) in the non-aqueous electrolyte solution.

The amount (amount of substance) of the tungsten element contained in the positive electrode active material is adjusted by the content (content rate) of the tungsten element in the positive electrode active material, the mass of the positive electrode active material contained in the positive electrode, and the like. The amount (amount of substance) of the carboxylic acid ester contained in the non-aqueous electrolyte solution is adjusted by the content (content rate) of the carboxylic acid ester in the non-aqueous electrolyte solution, the mass of the non-aqueous electrolyte solution contained in the non-aqueous electrolyte solution energy storage device, and the like. The amount (amount of substance) of the compound (X) contained in the non-aqueous electrolyte solution is adjusted by the content (content rate) of the compound (X) in the non-aqueous electrolyte solution, the mass of the non-aqueous electrolyte solution contained in the non-aqueous electrolyte solution energy storage device, and the like.

Usually, the non-aqueous electrolyte solution may further contain, in addition to the compound (X) and the carboxylic acid ester, a non-aqueous solvent other than the compound (X) and the carboxylic acid ester (hereinafter, also referred to as "another non-aqueous solvent"), and an electrolyte salt other than the compound (X) (hereinafter, also referred to as "another electrolyte salt").

The another non-aqueous solvent can be appropriately selected from known non-aqueous solvents. Examples of the another non-aqueous solvent include cyclic carbonates, linear carbonates, phosphoric acid esters, sulfonic acid esters, ethers, amides, and nitriles. As the another non-aqueous solvent, those obtained by substituting a part of hydrogen atoms contained in these compounds with halogen may be used.

Examples of the cyclic carbonates include ethylene carbonate (EC), propylene carbonate (PC), butylene carbonate (BC), and styrene carbonate. Among them, EC is preferable.

Examples of the linear carbonates include diethyl carbonate (DEC), dimethyl carbonate (DMC), ethyl methyl carbonate (EMC), diphenyl carbonate, trifluoroethyl methyl carbonate, and bis(trifluoroethyl) carbonate. Among them, DMC and EMC are preferable.

As the another non-aqueous solvent, a cyclic carbonate or a linear carbonate is preferably used, and a cyclic carbonate and a linear carbonate are more preferably used in combination. By using a cyclic carbonate, dissociation of the electrolyte salt can be promoted to improve the ion conductivity of the non-aqueous electrolyte solution. By using a linear carbonate, the viscosity of the non-aqueous electrolyte solution can be suppressed to be low. When a cyclic carbonate and a linear carbonate are used in combination, a volume ratio of the cyclic carbonate to the linear carbonate (cyclic carbonate: linear carbonate) is preferably, for example, in the range of from 5:95 to 50:50.

The another electrolyte salt can be appropriately selected from known electrolyte salts. Examples of the another electrolyte salt include lithium salts, sodium salts, potassium salts, magnesium salts, and onium salts. Among them, lithium salts are preferable.

Examples of the lithium salts include inorganic lithium salts such as LiPF₆, LiPO₂F₂, LiBF₄, LiClO₄, and LiN(SO₂F)₂, and lithium salts having a halogenated hydrocarbon group, such as LiSO₃CF₃, LiN(SO₂CF₃)₂, LiN(SO₂C₂F₅)₂, LiN(SO₂CF₃)(SO₂C₄F₉), LiC(SO₂CF₃)₃, and LiC(SO₂C₂F₅)₃. Among them, inorganic lithium salts are preferable, and LiPF₆ is more preferable.

When LiPF₆ is contained in the non-aqueous electrolyte solution, LiPF₆ is likely to react with water slightly present in the non-aqueous electrolyte solution to generate HF. It is considered that the presence of HF in the non-aqueous electrolyte solution promotes the elution of the tungsten element from the positive electrode active material into the non-aqueous electrolyte solution. Therefore, in a case where the non-aqueous electrolyte solution energy storage device using the non-aqueous electrolyte solution containing such a component is an embodiment of the present invention, an effect of improving a disadvantage that a discharge capacity after charge and discharge cycles is significantly reduced is particularly significantly produced.

A content of the another electrolyte salt in the non-aqueous electrolyte solution is preferably 0.1 mol/dm³ or more and 2.5 mol/dm³ or less, more preferably 0.3 mol/dm³ or more and 2.0 mol/dm³ or less, still more preferably 0.5 mol/dm³ or more and 1.7 mol/dm³ or less, and particularly preferably 0.7 mol/dm³ or more and 1.5 mol/dm³ or less, at 20°C and 1 atm. Further, a content of the electrolyte salt in the non-aqueous electrolyte solution is preferably 1% by mass or more and 35% by mass or less, more preferably 3% by mass or more and 30% by mass or less, still more preferably 5% by mass or more and 25% by mass or less, and particularly preferably 10% by mass or more and 20% by mass or less. When the content of the electrolyte salt is set to be within the above range, the ion conductivity of the non-aqueous electrolyte solution can be increased.

The non-aqueous electrolyte solution may contain another component in addition to the compound (X), the carboxylic acid ester, the another non-aqueous solvent, and the another electrolyte salt. As the another component, one type may be used alone, or two or more types may be mixed and used. A content of the another component contained in the non-aqueous electrolyte solution is preferably 0.01% by mass or more and 10% by mass or less, more preferably 0.1% by mass or more and 7% by mass or less, still more preferably 0.2% by mass or more and 5% by mass or less, and particularly preferably 0.3% by mass or more and 3% by mass or less, with respect to the total mass of the non-aqueous electrolyte solution.

The shape of the non-aqueous electrolyte solution energy storage device of the present embodiment is not particularly limited, and examples of the non-aqueous electrolyte solution energy storage device include a cylindrical battery, a prismatic battery, a flat-type battery, a coin battery, and a button battery.

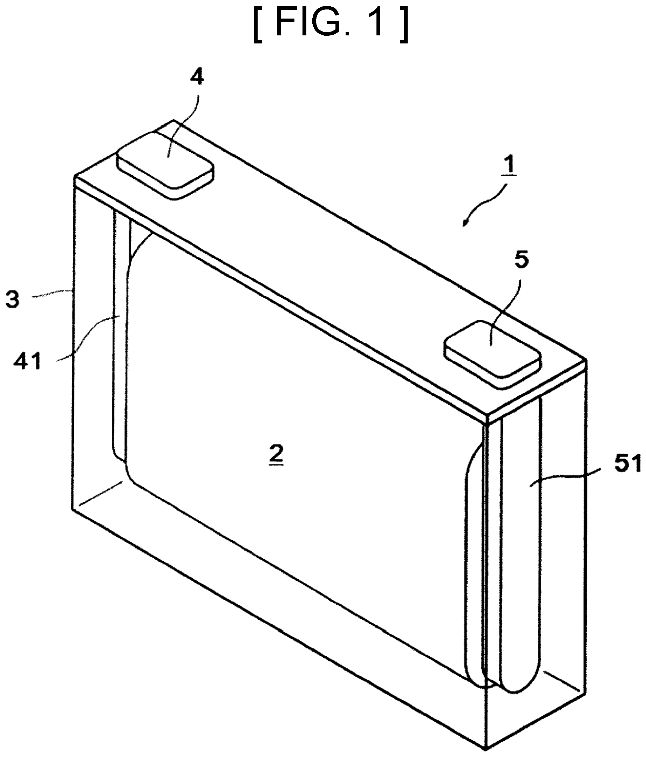

FIG. 1 illustrates a non-aqueous electrolyte solution energy storage device 1 as an example of the prismatic battery. FIG. 1 is a perspective view of the inside of a container. An electrode body 2 having a positive electrode and a negative electrode wound with a separator interposed therebetween is accommodated in a prismatic container 3. The positive electrode is electrically connected to a positive electrode terminal 4 via a positive electrode lead 41. The negative electrode is electrically connected to a negative electrode terminal 5 via a negative electrode lead 51.

### <Energy Storage Apparatus>

The non-aqueous electrolyte solution energy storage device of the present embodiment can be mounted as an energy storage unit (battery module) configured by assembling a plurality of non-aqueous electrolyte solution energy storage devices in power sources for automobiles such as electric vehicles (EVs), hybrid electric vehicles (HEVs), or plug-in hybrid electric vehicles (PHEVs), power sources for electronic devices such as personal computers or communication terminals, power sources for power storage, or the like. In this case, the technique of the present invention may be applied to at least one non-aqueous electrolyte solution energy storage device included in the energy storage unit.

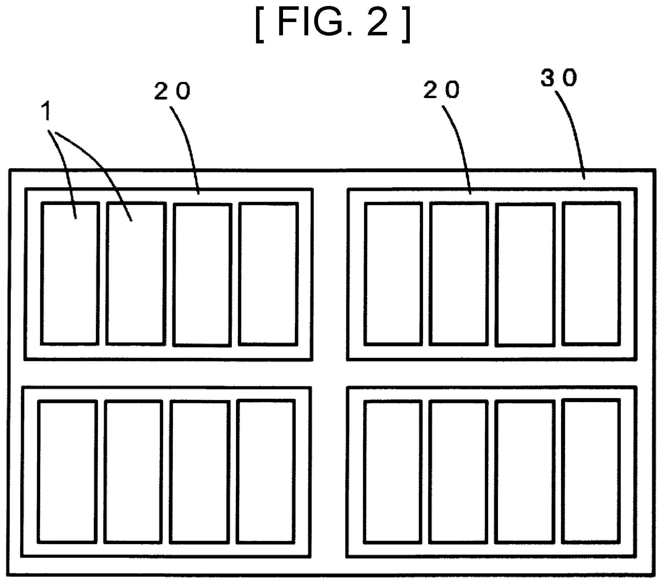

FIG. 2 illustrates an example of an energy storage apparatus 30 in which energy storage units 20 in each of which two or more electrically connected non-aqueous electrolyte solution energy storage devices 1 are assembled are further assembled. The energy storage apparatus 30 may include a bus bar (not illustrated) that electrically connects two or more non-aqueous electrolyte solution energy storage devices 1, a bus bar (not illustrated) that electrically connects two or more energy storage units 20, and the like. The energy storage unit 20 or the energy storage apparatus 30 may include a state monitoring device (not illustrated) that monitors a state of one or more non-aqueous electrolyte solution energy storage devices.

### <Method for Manufacturing Non-aqueous Electrolyte Solution Energy Storage Device>

A method for manufacturing the non-aqueous electrolyte solution energy storage device of the present embodiment can be appropriately selected from known methods. The manufacturing method includes, for example, preparing an electrode body, preparing a non-aqueous electrolyte solution, and accommodating the electrode body and the non-aqueous electrolyte solution in a container. Preparing the electrode body includes preparing a positive electrode and a negative electrode, and forming the electrode body by stacking or winding the positive electrode and the negative electrode with a separator interposed therebetween.

Preparing the positive electrode can be performed by, for example, applying a positive electrode mixture paste to a positive electrode substrate directly or via an intermediate layer and drying the positive electrode mixture paste. The positive electrode mixture paste contains components constituting the positive electrode active material layer, such as a positive electrode active material, and a dispersion medium. After drying the applied positive electrode mixture paste, pressing or the like may be performed.

Preparing the negative electrode can be performed by, for example, applying a negative electrode mixture paste to a negative electrode substrate directly or via an intermediate layer and drying the negative electrode mixture paste. The negative electrode mixture paste contains components constituting the negative electrode active material layer, such as a negative electrode active material, and a dispersion medium. After drying the applied negative electrode mixture paste, pressing or the like may be performed.

Preparing the non-aqueous electrolyte solution may be preparation of the non-aqueous electrolyte solution. The preparation of the non-aqueous electrolyte solution can be performed by, for example, mixing components constituting the non-aqueous electrolyte solution.

Accommodating the non-aqueous electrolyte solution in the container can be appropriately selected from known methods. For example, the non-aqueous electrolyte solution may be injected through an inlet formed in the container, and then the inlet may be sealed.

The method for manufacturing the non-aqueous electrolyte solution energy storage device may include performing initial charge and discharge for the assembled non-aqueous electrolyte solution energy storage device which has not yet been charged and discharged. As the initial charge and discharge, charge and discharge can be performed once or a plurality of times. By the initial charge and discharge, a part of the carboxylic acid ester and the like in the non-aqueous electrolyte solution accommodated in the container is reductively decomposed, and a film is formed on the surface of the negative electrode active material.

### <Other Embodiments>

The non-aqueous electrolyte solution energy storage device of the present invention is not limited to the above-described embodiment, and various modifications may be made without departing from the gist of the present invention. For example, a configuration of one embodiment can be added to a configuration of another embodiment, and a part of a configuration of one embodiment can be replaced with a configuration of another embodiment or a well-known technique. Further, a part of the configuration of one embodiment can be deleted. In addition, a well-known technique can be added to the configuration of one embodiment.

In the above-described embodiment, the case where the non-aqueous electrolyte solution energy storage device is used as a chargeable and dischargeable non-aqueous electrolyte solution secondary battery (a lithium-ion secondary battery) has been described. However, the non-aqueous electrolyte solution energy storage device may be of any type, shape, size, and capacity. The present invention can also be applied to various secondary batteries, and capacitors such as electric double layer capacitors or lithium-ion capacitors.

In the above-described embodiment, the electrode body in which the positive electrode and the negative electrode are stacked with the separator interposed therebetween has been described, but the electrode body may not include a separator. For example, the positive electrode and the negative electrode may be in direct contact, with a non-conductive layer being formed on the active material layer of either the positive electrode or the negative electrode.

### Examples

Hereinafter, the present invention will be described more specifically with reference to Examples, but the present invention is not limited to Examples below.

### [Example 1]

### (Fabrication of positive electrode)

A positive electrode active material composed of particles of LiNi_{1/3}Mn_{1/3}Co_{1/3}O₂ with tungsten oxide attached to the surface of the particles was prepared. A content of a tungsten element relative to transition metal elements other than the tungsten element in this positive electrode active material was 1 mol%.

A positive electrode mixture paste was prepared by using the above-described positive electrode active material, acetylene black (AB) as a conductive agent, polyvinylidene fluoride (PVDF) as a binder, and N-methylpyrrolidone (NMP) as a dispersion medium. A mass ratio of the positive electrode active material, AB, and PVDF was set to 93:5:2 (in terms of solid content). The positive electrode mixture paste was applied to both surfaces of an aluminum foil as a positive electrode substrate, and dried. Then, roll-pressing was performed to obtain a positive electrode in which a positive electrode active material layer is stacked on both surfaces of the positive electrode substrate. The amount of the tungsten element contained in the obtained positive electrode was 0.003 mol.

### (Fabrication of negative electrode)

Graphite having a BET specific surface area of 4.4 m²/g was prepared as a negative electrode active material.

A negative electrode mixture paste was prepared by using the above-described negative electrode active material, styrene-butadiene rubber (SBR) as a binder, carboxymethyl cellulose (CMC) as a thickener, and water as a dispersion medium. A mass ratio of the negative electrode active material, SBR, and CMC was set to 98.5:1:0.5 (in terms of solid content). The negative electrode mixture paste was applied to both surfaces of a copper foil as a negative electrode substrate, and dried. Then, roll-pressing was performed to obtain a negative electrode in which a negative electrode active material layer is stacked on both surfaces of the negative electrode substrate.

### (Preparation of non-aqueous electrolyte solution)

In a non-aqueous solvent in which ethylene carbonate (EC), dimethyl carbonate (DMC), ethyl methyl carbonate (EMC), and methyl propionate (MP) as a carboxylic acid ester are mixed at a volume ratio of 30:35:32:3, LiPF₆ was dissolved at a content of 1.2 mol/dm³, lithium bis(oxalate)borate (LiBOB: reductive decomposition potential 1.70 V (vs. Li/Li⁺)) as a compound (X) was dissolved at a content of 0.5% by mass, and vinylene carbonate (VC: reductive decomposition potential 0.64 V (vs. Li/Li⁺)) as the same compound (X) was dissolved at a content of 0.2% by mass, respectively, to prepare a non-aqueous electrolyte solution.

### (Separator)

A polyolefin microporous film was used as a separator.

### (Assembly of non-aqueous electrolyte solution energy storage device)

The positive electrode, the negative electrode, and the separator were used to obtain a wound type electrode body. The electrode body was accommodated in a container, and the non-aqueous electrolyte solution was injected to obtain a non-aqueous electrolyte solution energy storage device which has not yet been charged and discharged.

For the obtained non-aqueous electrolyte solution energy storage device which has not yet been charged and discharged, constant-current constant-voltage charge was performed as initial charge and discharge in a constant-temperature layer at 25°C under conditions of a charge current of 1.0 C and a charge cutoff voltage of 4.1 V until the total charge time reached 3 hours, and then, after a rest of 10 minutes, constant-current discharge was performed under conditions of a discharge current of 1.0 C and a discharge cutoff voltage of 3.0 V to obtain a non-aqueous electrolyte solution energy storage device of Example 1. The amount of discharge electricity at this time was defined as an initial discharge capacity. The amount of the carboxylic acid ester contained in the non-aqueous electrolyte solution after the initial charge and discharge was 0.010 mol, and a molar ratio (CE/W) of the amount of the carboxylic acid ester contained in the non-aqueous electrolyte solution to the amount of the tungsten element contained in the positive electrode active material was 3.0.

### [Examples 2 to 4 and Comparative Example 1]

Non-aqueous electrolyte solution energy storage devices of Examples 2 to 4 and Comparative Example 1 were obtained in the same manner as in Example 1, except that graphite having a BET specific surface area shown in Table 1 was used as the negative electrode active material.

### [Reference Example A (Reference Examples A1 to A4)]

Non-aqueous electrolyte solution energy storage devices of Reference Example A (Reference Examples A1 to A4) were obtained in the same manner as in Example 1, except that LiNi_{1/3}Mn_{1/3}Co_{1/3}O₂ containing no tungsten element was used as the positive electrode active material, a non-aqueous solvent in which EC, DMC, and EMC are mixed at a volume ratio of 30:35:35 was used without containing a carboxylic acid ester in the non-aqueous electrolyte solution, and graphite having a BET specific surface area shown in Table 1 was used as the negative electrode active material.

### [Reference Example B (Reference Examples B1 to B4)]

Non-aqueous electrolyte solution energy storage devices of Reference Example B (Reference Examples B1 to B4) were obtained in the same manner as in Example 1, except that a non-aqueous solvent in which EC, DMC, and EMC are mixed at a volume ratio of 30:35:35 was used without containing a carboxylic acid ester in the non-aqueous electrolyte solution, and graphite having a BET specific surface area shown in Table 1 was used as the negative electrode active material.

### [Evaluation 1]

### (1) Initial output

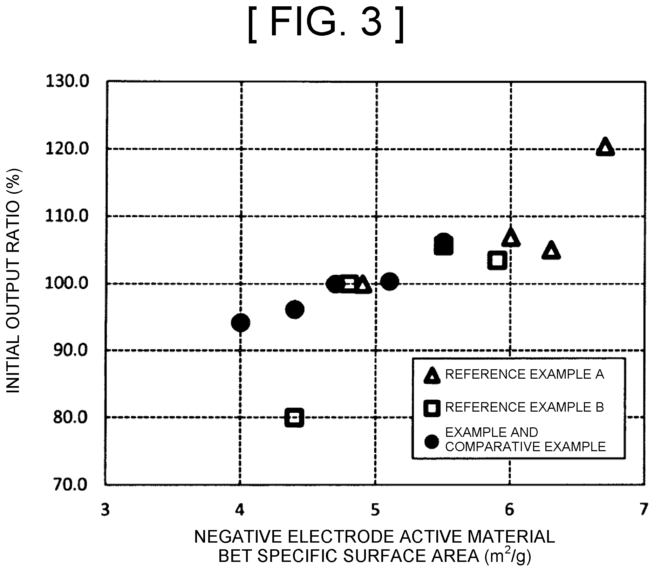

For each of the obtained non-aqueous electrolyte solution energy storage devices of Examples 1 to 4, Comparative Example 1, Reference Example A, and Reference Example B, constant-current charge of the amount of electricity of 50% of the initial discharge capacity was performed at a charge current of 1.0 C in a constant-temperature layer at 25°C to set a state of charge (SOC) to 50%. Subsequently, after storage in a constant-temperature layer at -30°C for 4 hours, discharge was performed in the constant-temperature layer at -30°C at a current of 0.2 C, 0.5 C, or 1.0 C for 10 seconds. After completion of each discharge, constant-current charge was performed at a charge current of 1.0 C to set the SOC to 50%. A relationship between the current and the voltage one second after the start of the discharge in each discharge was plotted, and a direct-current resistance was determined from the slope of a straight line obtained from the plotted three points. From the determined direct-current resistance, the output one second after the start of the discharge was calculated and defined as the initial output. The initial output was evaluated as a relative value (initial output ratio) obtained by comparing the non-aqueous electrolyte solution energy storage devices different only in the BET specific surface area of the negative electrode active material. Specifically, in Examples 1 to 4 and Comparative Example 1, the initial output of Example 2 was used as a reference (100.0%). In Reference Example A (Reference Examples A1 to A4), the initial output of Reference Example A1 was used as a reference (100.0%). In Reference Example B (Reference Examples B1 to B4), the initial output of Reference Example B2 was used as a reference (100.0%). The results are shown in Table 1 and FIG. 3.

### (2) Charge and discharge cycle test

Next, for each of the non-aqueous electrolyte solution energy storage devices, constant-current discharge was performed in a constant-temperature layer at 25°C under conditions of a discharge current of 1.0 C and a discharge cutoff voltage of 3.0 V, and then, after a rest of 10 minutes, constant-current constant-voltage charge was performed at a charge current of 1.0 C to a voltage corresponding to 20% of the SOC determined from the SOC-OCV curve to set the SOC to 20%. Subsequently, after storage in a constant-temperature bath at 55°C for 4 hours, constant-current charge was performed in the constant-temperature bath at 55°C at a charge current of 10 C to a voltage corresponding to 80% of the SOC, and then, constant-current discharge was performed at a discharge current of 10 C to a voltage corresponding to 20% of the SOC. The charge and discharge cycle was repeated for 1,000 hours with a rest time of 72 hours or more every 250 hours.

### (3) Discharge capacity after charge and discharge cycle test

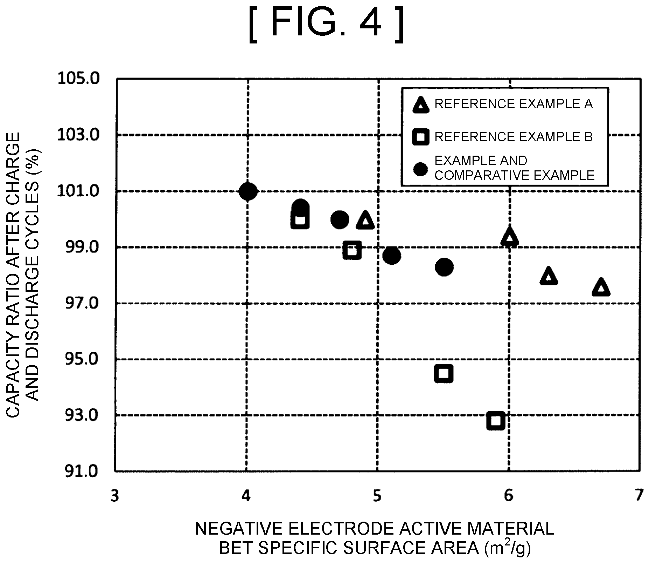

After the charge and discharge cycle test, charge and discharge were performed under the same conditions as in the initial charge and discharge for the above-described non-aqueous electrolyte solution energy storage device which has not yet been charged and discharged. The amount of discharge electricity at this time was defined as a discharge capacity after the charge and discharge cycle test. The discharge capacity after the charge and discharge cycle test was evaluated as a relative value (capacity ratio after charge and discharge cycles) obtained by comparing the non-aqueous electrolyte solution energy storage devices different only in the BET specific surface area of the negative electrode active material. Specifically, in Examples 1 to 4 and Comparative Example 1, the discharge capacity after the charge and discharge cycle test of Example 2 was used as a reference (100.0%). In Reference Example A (Reference Examples A1 to A4), the discharge capacity after the charge and discharge cycle test of Reference Example A1 was used as a reference (100.0%). In Reference Example B (Reference Examples B1 to B4), the discharge capacity after the charge and discharge cycle test of Reference Example B1 was used as a reference (100.0%). The results are shown in Table 1 and FIG. 4.

**[Table 1]**

| | POSITIVE ELECTRODE ACTIVE MATERIAL | NON-AQUEOUS ELECTROLYTE SOLUTION | NEGATIVE ELECTRODE ACTIVE MATERIAL | CAPACITY RATIO AFTER CHARGE AND DISCHARGE CYCLES (%) | INITIAL OUTPUT RATIO (%) |
|---|---|---|---|---|---|
| | W (mol) | CARBOXYLIC ACID ESTER (mol) | BET SPECIFIC SURFACE AREA (m²/g) | | |
| REFERENCE EXAMPLE A1 | - | - | 4.9 | 100.0 | 100.0 |
| REFERENCE EXAMPLE A2 | - | - | 6.0 | 99.4 | 107.0 |
| REFERENCE EXAMPLE A3 | - | - | 6.3 | 98.0 | 105.1 |
| REFERENCE EXAMPLE A4 | - | - | 6.7 | 97.6 | 120.5 |
| REFERENCE EXAMPLE B1 | 0.003 | - | 4.4 | 100.0 | 80.0 |
| REFERENCE EXAMPLE B2 | 0.003 | - | 4.8 | 98.9 | 100.0 |
| REFERENCE EXAMPLE B3 | 0.003 | - | 5.5 | 94.5 | 105.7 |
| REFERENCE EXAMPLE B4 | 0.003 | - | 5.9 | 92.8 | 103.5 |
| COMPARATIVE EXAMPLE 1 | 0.003 | 0.010 | 4.0 | 101.0 | 94.2 |
| EXAMPLE 1 | 0.003 | 0.010 | 4.4 | 100.4 | 96.2 |
| EXAMPLE 2 | 0.003 | 0.010 | 4.7 | 100.0 | 100.0 |
| EXAMPLE 3 | 0.003 | 0.010 | 5.1 | 98.7 | 100.4 |
| EXAMPLE 4 | 0.003 | 0.010 | 5.5 | 98.3 | 106.3 |

As shown in Table 1 and FIG. 3, as the BET specific surface area of the negative electrode active material increased, the initial output tended to increase. On the other hand, the discharge capacity after charge and discharge cycles had the following tendency as shown in Table 1 and FIG. 4. In the case of each of the non-aqueous electrolyte solution energy storage devices of Reference Example A in which the positive electrode active material containing no tungsten element was used, even when the BET specific surface area of the negative electrode active material increased, the discharge capacity after charge and discharge cycles did not decrease so much. In the case of each of the non-aqueous electrolyte solution energy storage devices of Reference Example B in which the positive electrode active material containing a tungsten element was used, when the BET specific surface area of the negative electrode active material increased, the discharge capacity after charge and discharge cycles significantly decreased. On the other hand, in the case of each of the non-aqueous electrolyte solution energy storage devices of Examples in which the positive electrode active material containing a tungsten element was used and the compound (X) and the carboxylic acid ester were contained in the non-aqueous electrolyte solution, even when the BET specific surface area of the negative electrode active material increased, the discharge capacity after charge and discharge cycles did not decrease so much. As described above, in each of the non-aqueous electrolyte solution energy storage devices of Examples, in the non-aqueous electrolyte solution energy storage device using the positive electrode active material containing a tungsten element, it was possible to improve the disadvantage that the discharge capacity after charge and discharge cycles was significantly reduced when the negative electrode active material having a large specific surface area was applied, and it was possible to increase the initial output by increasing the BET specific surface area of the negative electrode active material.

### [Examples 5 to 7 and Comparative Example 2]

### (Fabrication of positive electrode)

A positive electrode active material composed of particles of LiNi_{1/3}Mn_{1/3}Co_{1/3}O₂ with tungsten oxide attached to the surface of the particles was prepared. A content of a tungsten element relative to transition metal elements other than the tungsten element in this positive electrode active material was 1 mol%.

A positive electrode mixture paste was prepared by using the above-described positive electrode active material, acetylene black (AB) as a conductive agent, polyvinylidene fluoride (PVDF) as a binder, and N-methylpyrrolidone (NMP) as a dispersion medium. A mass ratio of the positive electrode active material, AB, and PVDF was set to 93:5:2 (in terms of solid content). The positive electrode mixture paste was applied to both surfaces of an aluminum foil as a positive electrode substrate, and dried. Then, roll-pressing was performed to obtain a positive electrode in which a positive electrode active material layer is stacked on both surfaces of the positive electrode substrate. A mass of the tungsten element contained in the obtained positive electrode was 0.61 g.

### (Fabrication of negative electrode)

Graphite having a BET specific surface area of 5.7 m²/g was prepared as a negative electrode active material.

A negative electrode mixture paste was prepared by using the above-described negative electrode active material, styrene-butadiene rubber (SBR) as a binder, carboxymethyl cellulose (CMC) as a thickener, and water as a dispersion medium. A mass ratio of the negative electrode active material, SBR, and CMC was set to 98.5:1:0.5 (in terms of solid content). The negative electrode mixture paste was applied to both surfaces of a copper foil as a negative electrode substrate, and dried. Then, roll-pressing was performed to obtain a negative electrode in which a negative electrode active material layer is stacked on both surfaces of the negative electrode substrate.

### (Preparation of non-aqueous electrolyte solution)

In a non-aqueous solvent in which ethylene carbonate (EC), dimethyl carbonate (DMC), ethyl methyl carbonate (EMC), and methyl propionate (MP) as a carboxylic acid ester are mixed at a volume ratio of 30:35:32:3, LiPF₆ was dissolved at a content of 1.2 mol/dm³, lithium bis(oxalate)borate (LiBOB: reductive decomposition potential 1.70 V (vs. Li/Li⁺)) as a compound (X) was dissolved at a content of 0.5% by mass, and vinylene carbonate (VC: reductive decomposition potential 0.64 V (vs. Li/Li⁺)) as the same compound (X) was dissolved at a content of 0.2% by mass, respectively, to prepare a non-aqueous electrolyte solution of Example 5. A non-aqueous electrolyte solution of Example 6 was prepared in the same procedure as in Example 5 except that a non-aqueous solvent in which EC, DMC, EMC, and MP are mixed at a volume ratio of 30:35:30:5 was used. A non-aqueous electrolyte solution of Example 7 was prepared in the same procedure as in Example 5 except that a non-aqueous solvent in which EC, DMC, EMC, and MP are mixed at a volume ratio of 30:35:28:7 was used. A non-aqueous electrolyte solution of Comparative Example 2 was prepared in the same procedure as in Example 5 except that a non-aqueous solvent in which EC, DMC, and EMC are mixed at a volume ratio of 30:35:35 was used without containing a carboxylic acid ester in the non-aqueous electrolyte solution. The contents of the carboxylic acid ester and the compound (X) in the non-aqueous electrolyte solutions prepared in Examples and Comparative Example are shown in Table 2. In the table, MP is methyl propionate, VC is vinylene carbonate, and LiBOB is lithium bis(oxalate)borate.

**[Table 2]**

| | COMPOSITION OF PREPARED NON-AQUEOUS ELECTROLYTE SOLUTION (% by mass) | | |
|---|---|---|---|
| | CARBOXYLIC ACID ESTER | COMPOUND (X) | |
| | MP | VC | LiBOB |
| COMPARATIVE EXAMPLE 2 | 0 | 0.20 | 0.50 |
| EXAMPLE 5 | 2.04 | 0.20 | 0.50 |
| EXAMPLE 6 | 3.40 | 0.20 | 0.50 |
| EXAMPLE 7 | 4.77 | 0.20 | 0.50 |

### (Separator)

A polyolefin microporous film was used as a separator.

### (Assembly of non-aqueous electrolyte solution energy storage device)

The positive electrode, the negative electrode, and the separator were used to obtain a wound type electrode body. The electrode body was accommodated in a container, and the non-aqueous electrolyte solution was injected to obtain a non-aqueous electrolyte solution energy storage device which has not yet been charged and discharged.

For the obtained non-aqueous electrolyte solution energy storage device which has not yet been charged and discharged, constant-current constant-voltage charge was performed as initial charge and discharge in a constant-temperature layer at 25°C under conditions of a charge current of 1.0 C and a charge cutoff voltage of 4.1 V until the total charge time reached 3 hours, and then, after a rest of 10 minutes, constant-current discharge was performed under conditions of a discharge current of 1.0 C and a discharge cutoff voltage of 3.0 V to obtain a non-aqueous electrolyte solution energy storage device of each of Examples 5 to 7 and Comparative Example 2. The amount of discharge electricity at this time was defined as an initial discharge capacity. Two non-aqueous electrolyte solution energy storage devices were fabricated in each of Examples 5 to 7 and Comparative Example 2 to use one of the two for measuring the amounts of the carboxylic acid ester and the compound (X) in the non-aqueous electrolyte solution in the obtained non-aqueous electrolyte solution energy storage device, and to use an other one of the two for being subjected to a charge and discharge cycle test.

### (Measurement of amounts of carboxylic acid ester and compound (X))

For each of the obtained non-aqueous electrolyte solution energy storage devices, the contents (% by mass) of the carboxylic acid ester and the compound (X) in the non-aqueous electrolyte solution were measured by the above-described method. The molar ratio (CE/W) of the amount of the carboxylic acid ester contained in the non-aqueous electrolyte solution to the amount of the tungsten element contained in the positive electrode active material and the molar ratio (CE/X) of the amount of the carboxylic acid ester contained in the non-aqueous electrolyte solution to the amount of the compound (X) contained in the non-aqueous electrolyte solution were determined from the mass of the tungsten element contained in the positive electrode active material (0.61 g), the mass of the non-aqueous electrolyte solution (45.8 g), the atomic weight of the tungsten element (183.84), and the molecular weights of the components. Further, the percentage of the content of each compound (X) in the non-aqueous electrolyte solution included in the obtained non-aqueous electrolyte solution energy storage device to the content of each compound (X) in the prepared non-aqueous electrolyte solution (non-aqueous electrolyte solution before being injected into the container) was determined as a residual ratio (%). These values are shown in Table 3.

### [Evaluation 2]

### (1) Initial output

For each of the obtained non-aqueous electrolyte solution energy storage devices of Examples 5 to 7 and Comparative Example 2, constant-current charge of the amount of electricity of 50% of the initial discharge capacity was performed at a charge current of 1.0 C in a constant-temperature layer at 25°C to set a state of charge (SOC) to 50%. Subsequently, after storage in a constant-temperature bath at -30°C for 4 hours, discharge was performed in the constant-temperature bath at -30°C at a current of 0.2 C, 0.5 C, or 1.0 C for 10 seconds. After completion of each discharge, constant-current charge was performed at a charge current of 1.0 C to set the SOC to 50%. A relationship between the current and the voltage one second after the start of the discharge in each discharge was plotted, and a direct-current resistance was determined from the slope of a straight line obtained from the plotted three points. From the determined direct-current resistance, the output one second after the start of the discharge was calculated and defined as the initial output.

### (2) Charge and discharge cycle test

Next, for each of the non-aqueous electrolyte solution energy storage devices, constant-current discharge was performed in a constant-temperature layer at 25°C under conditions of a discharge current of 1.0 C and a discharge cutoff voltage of 3.0 V, and then, after a rest of 10 minutes, constant-current constant-voltage charge was performed at a charge current of 1.0 C to a voltage corresponding to 20% of the SOC determined from the SOC-OCV curve to set the SOC to 20%. Subsequently, after storage in a constant-temperature bath at 55°C for 4 hours, constant-current charge was performed in the constant-temperature bath at 55°C at a charge current of 10 C to a voltage corresponding to 80% of the SOC, and then, constant-current discharge was performed at a discharge current of 10 C to a voltage corresponding to 20% of the SOC. The charge and discharge cycle was repeated for 1,000 hours with a rest time of 72 hours or more every 250 hours.

### (3) Output after charge and discharge cycle test

Then, the output after the charge and discharge cycle test was determined by the same procedure as the procedure for determining the initial output. Further, the percentage of the output after the charge and discharge cycle test to the initial output was determined and defined as an output retention rate. These results are shown in Table 3.

**[Table 3]**

| | COMPOSITION OF NON-AQUEOUS ELECTROLYTE SOLUTION (% by mass) | | | RESIDUAL RATIO OF COMPOUND (X) (%) | | MOLAR RATIO (CE/W) | MOLAR RATIO (CE/X) | AFTER CHARGE AND DISCHARGE CYCLES | |
|---|---|---|---|---|---|---|---|---|---|
| | CARBOXYLIC ACID ESTER (CE) | COMPOUND (X) | | | | | | OUTPUT (W) | OUTPUT RETENTION RATE (%) |
| | MP | VC | LiBOB | VC | LiBOB | | | | |
| COMPARATIVE EXAMPLE 2 | 0 | 0.12 | 0.20 | 60 | 40 | 0.0 | 0 | 163 | 97.8 |
| EXAMPLE 5 | 1.90 | 0.15 | 0.31 | 75 | 62 | 3.0 | 6.5 | 187 | 101.4 |
| EXAMPLE 6 | 3.09 | 0.16 | 0.33 | 80 | 66 | 4.8 | 9.9 | 196 | 100.7 |
| EXAMPLE 7 | 4.44 | 0.16 | 0.32 | 80 | 64 | 7.0 | 14.4 | 195 | 100.0 |

As shown in Table 3, it is found that the output after charge and discharge cycles increases, and the output retention rate also increases by containing the compound (X) and the carboxylic acid ester in the non-aqueous electrolyte solution. In addition, as the molar ratio (CE/X) or the molar ratio (CE/W) was relatively larger, the output after charge and discharge cycles tended to increase. On the other hand, as the molar ratio (CE/X) or the molar ratio (CE/W) was relatively smaller, the output retention rate after charge and discharge cycles tended to increase.

In addition, as can be confirmed from the column of "RESIDUAL RATIO OF COMPOUND (X)" in Table 3, it was found that the consumption of the compound (X) during the initial charge and discharge is suppressed and the residual ratio increases by containing the carboxylic acid ester in the non-aqueous electrolyte solution.

### [Reference Example C (Reference Examples C1 to C3)]

### (Fabrication of positive electrode)

A positive electrode active material composed of particles of LiNi_{1/3}Mn_{1/3}Co_{1/3}O₂ with tungsten oxide attached to the surface of the particles was prepared. A content of a tungsten element relative to transition metal elements other than the tungsten element in this positive electrode active material was 1 mol%.

A positive electrode mixture paste was prepared by using the above-described positive electrode active material, acetylene black (AB) as a conductive agent, polyvinylidene fluoride (PVDF) as a binder, and N-methylpyrrolidone (NMP) as a dispersion medium. A mass ratio of the positive electrode active material, AB, and PVDF was set to 93:5:2 (in terms of solid content). The positive electrode mixture paste was applied to both surfaces of an aluminum foil as a positive electrode substrate, and dried. Then, roll-pressing was performed to obtain a positive electrode in which a positive electrode active material layer is stacked on both surfaces of the positive electrode substrate.

### (Fabrication of negative electrode)

Graphite having a BET specific surface area of 5.7 m²/g was prepared as a negative electrode active material.

A negative electrode mixture paste was prepared by using the above-described negative electrode active material, styrene-butadiene rubber (SBR) as a binder, carboxymethyl cellulose (CMC) as a thickener, and water as a dispersion medium. A mass ratio of the negative electrode active material, SBR, and CMC was set to 98.5:1:0.5 (in terms of solid content). The negative electrode mixture paste was applied to both surfaces of a copper foil as a negative electrode substrate, and dried. Then, roll-pressing was performed to obtain a negative electrode in which a negative electrode active material layer is stacked on both surfaces of the negative electrode substrate.

### (Preparation of non-aqueous electrolyte solution)

In a non-aqueous solvent in which ethylene carbonate (EC), dimethyl carbonate (DMC), ethyl methyl carbonate (EMC), and methyl propionate (MP) as a carboxylic acid ester are mixed at a volume ratio of 30:35:32:3, LiPF₆ was dissolved at a content of 1.2 mol/dm³, LiBOB as a compound (X) was dissolved at a content of 0.5% by mass, and VC as the same compound (X) was dissolved at a content of 0.2% by mass, respectively, to prepare a non-aqueous electrolyte solution of Reference Example C2. A non-aqueous electrolyte solution of Reference Example C3 was prepared in the same procedure as in Reference Example C2 except that ethyl acetate (EA) was used instead of MP. A non-aqueous electrolyte solution of Reference Example C1 was prepared in the same procedure as in Reference Example C2 except that a non-aqueous solvent in which EC, DMC, and EMC are mixed at a volume ratio of 30:35:35 was used without containing a carboxylic acid ester in the non-aqueous electrolyte solution.

### (Separator)

A polyolefin microporous film was used as a separator.

### (Assembly of non-aqueous electrolyte solution energy storage device)

The positive electrode, the negative electrode, and the separator were used to obtain a wound type electrode body. The electrode body was accommodated in a container, and the non-aqueous electrolyte solution was injected to obtain a non-aqueous electrolyte solution energy storage device which has not yet been charged and discharged.

For the obtained non-aqueous electrolyte solution energy storage device which has not yet been charged and discharged, constant-current constant-voltage charge was performed as initial charge and discharge in a constant-temperature layer at 25°C under conditions of a charge current of 1.0 C and a charge cutoff voltage of 4.1 V until the total charge time reached 3 hours, and then, after a rest of 10 minutes, constant-current discharge was performed under conditions of a discharge current of 1.0 C and a discharge cutoff voltage of 3.0 V to obtain a non-aqueous electrolyte solution energy storage device of each Reference Example C (Reference Examples C1 to C3). The amount of discharge electricity at this time was defined as an initial discharge capacity.

### [Evaluation 3]

### (1) Initial resistance

For each of the obtained non-aqueous electrolyte solution energy storage devices of Reference Example C, constant-current charge of the amount of electricity of 50% of the initial discharge capacity was performed at a charge current of 1.0 C in a constant-temperature layer at 25°C to set a state of charge (SOC) to 50%. Subsequently, after storage in a constant-temperature layer at -10°C for 4 hours, discharge was performed in the constant-temperature layer at -10°C at a current of 0.2 C, 0.5 C, or 1.0 C for 30 seconds. After completion of each discharge, constant-current charge was performed at a charge current of 1.0 C to set the SOC to 50%. A relationship between the current and the voltage 10 seconds after the start of the discharge in each discharge was plotted, and a direct-current resistance (initial resistance) was determined from the slope of a straight line obtained from the plotted three points. The results are shown in Table 4. In the table, MP is methyl propionate, and EA is ethyl acetate.

**[Table 4]**

| | NON-AQUEOUS SOLVENT | | INITIAL RESISTANCE (mΩ) |
|---|---|---|---|
| | CARBOXYLIC ACID ESTER | | |
| | TYPE | CONTENT (% by volume) | |
| REFERENCE EXAMPLE C1 | - | - | 186.7 |
| REFERENCE EXAMPLE C2 | MP | 3 | 173.9 |
| REFERENCE EXAMPLE C3 | EA | 3 | 178.9 |

As shown in Table 4, it was confirmed that the initial resistance of the non-aqueous electrolyte solution energy storage device was reduced by containing the carboxylic acid ester in the non-aqueous electrolyte solution, and the effect was higher when the carboxylic acid ester was methyl propionate.

### INDUSTRIAL APPLICABILITY

The present invention can be applied to non-aqueous electrolyte solution energy storage devices and the like which are used as power sources of electronic devices such as personal computers and communication terminals, automobiles, and the like.

### DESCRIPTION OF REFERENCE NUMERALS

1 Non-aqueous electrolyte solution energy storage device
2 Electrode body
3 Container
4 Positive electrode terminal
41 Positive electrode lead
5 Negative electrode terminal
51 Negative electrode lead
20 Energy storage unit
30 Energy storage apparatus

## Claims

1. A non-aqueous electrolyte solution energy storage device comprising:
a positive electrode;
a negative electrode; and
a non-aqueous electrolyte solution, wherein
the positive electrode contains a positive electrode active material containing a tungsten element,
the negative electrode contains a carbon material as a negative electrode active material,
a BET specific surface area of the negative electrode active material is 4.4 m²/g or more, and
the non-aqueous electrolyte solution contains a compound having a reductive decomposition potential of 0.5 V (vs. Li/Li⁺) or more and 2.0 V (vs. Li/Li⁺) or less and a carboxylic acid ester.

2. The non-aqueous electrolyte solution energy storage device according to claim 1, wherein the compound includes at least one selected from the group consisting of vinylene carbonate, fluoroethylene carbonate, vinyl ethylene carbonate, ethylene sulfate, 4,5-pentene sulfate, 4,4'-bis(2,2-dioxo-1,3,2-dioxathiolane), 4-methylsulfonyloxymethyl-2,2-dioxo-1,3,2-dioxathiolane, 1,3-propene sultone, 1,3-propane sultone, lithium bis(oxalate)borate, lithium difluoro(oxalate)borate, and lithium difluorobis(oxalate)phosphate.

3. The non-aqueous electrolyte solution energy storage device according to claim 1 or 2, wherein a molar ratio of an amount of the carboxylic acid ester contained in the non-aqueous electrolyte solution to an amount of the tungsten element contained in the positive electrode active material is 2.0 or more and 7.0 or less.

4. The non-aqueous electrolyte solution energy storage device according to claim 1 or 2, wherein a molar ratio of an amount of the carboxylic acid ester contained in the non-aqueous electrolyte solution to an amount of the tungsten element contained in the positive electrode active material is 4.8 or more.

5. The non-aqueous electrolyte solution energy storage device according to claim 1 or 2, wherein a molar ratio of an amount of the carboxylic acid ester contained in the non-aqueous electrolyte solution to an amount of the compound contained in the non-aqueous electrolyte solution is 4.0 or more and 14.4 or less.

6. The non-aqueous electrolyte solution energy storage device according to claim 1 or 2, wherein a molar ratio of an amount of the carboxylic acid ester contained in the non-aqueous electrolyte solution to an amount of the compound contained in the non-aqueous electrolyte solution is 9.9 or more.
